# EUROPEAN PATENT SPECIFICATION

(11) **EP 4 187 342 B1**
(45) Date of publication and mention of the grant of the patent: **17.07.2024**
(21) Application number: 21290078.1
(22) Date of filing: 30.11.2021
(51) Int. Cl.: G05D 1/224, G05D 1/227, G05D 105/22, G05D 107/13, G05D 109/10

(54) **TELEOPERABLE VEHICLE AND SYSTEM**
FERNBEDIENBARES FAHRZEUG UND SYSTEM
VÉHICULE ET SYSTÈME TÉLÉ-OPÉRABLES

(43) Date of publication of application: 31.05.2023
(73) Proprietor: Hitachi, Ltd., Tokyo 100-8280 (JP)
(72) Inventor: Fernandez-Moral, Eduardo, 92130 Issy-les-Moulineaux (FR)
(74) Representative: MERH-IP Matias Erny Reichl Hoffmann Patentanwälte PartG mbB

(56) References cited:
- US-A1- 2018 095 457
- US-A1- 2019 302 755
- US-A1- 2019 317 491
- US-A1- 2021 116 907

## Description

The present disclosure relates to an autonomously driven vehicle and a system including a plurality of such vehicles. The disclosure enables teleoperation of the vehicles by a driver of another vehicle in case that an abnormal situation is detected which prevents that autonomous driving can be continued or carried out. The system communicably interconnects all vehicles participating in the system so that one vehicle can request support and a driver of another vehicle can provide the support, in particular, in the form of vehicle-to-vehicle (V2V) teleoperation or by on-site assistance. The request for support can be issued and transmitted in an optimized manner and, depending on the incident, the support action itself can be determined based on the type of the incident. The system may be a public transportation system where the vehicles are trains, subways, busses and/or the like or it may be a group of autonomously driving trucks, especially during long-distance travels on highways, or even private cars or the like. The present disclosure offers a number of technical advantages which will become clearer in the following description.

### Background

Our society's paradigm of future transportation plans the deployment of autonomous vehicles on the roads, such as taxis, trucks, shuttles and private cars, as well as railway based vehicles, such as tram, metro and trains. Despite the different levels of autonomy that these vehicles may implement, incidents, i.e. abnormal situations, can disrupt the autonomous service and may necessitate human intervention. Such disruptions are especially critical for public transportation systems where an incident at one vehicle can disrupt the whole system and can affect thousands of users, e.g., when a tram or metro faces an incident. Classic teleoperation (C2V) of vehicles, which means that vehicles are remotely operated by an operator located in a teleoperation center, can address this problem to a certain extent, however, classic teleoperation cannot solve, among others, when physical/on-site assistance is required.

For instance, US 2018/095457 A1 shows a control method for an autonomous vehicle and a server implementing the control method, the method including: acquiring, by a server, information related to the vehicle; determining, by the server, based on the acquired information, whether the vehicle needs to be remotely controlled; and based on the determination that the vehicle needs to be remotely controlled, remotely controlling the autonomous vehicle by the server or a nearby object.

US 2019/302755 A1 shows an information processing apparatus which includes: an equipment information acquiring unit that acquires first equipment information indicating equipment of a remotely driven vehicle which is to be remotely driven; an equipment information comparing unit that compares the first equipment information with second equipment information indicating equipment of a remotely driving apparatus that is to remotely drive the remotely driven vehicle; and a display control unit that causes information based on a result of the comparison by the equipment information comparing unit to be displayed.

US 2019/317491 A1 shows a a remote-operation apparatus, in which a communication circuit receives, from an autonomous vehicle via a network, detection data indicating circumstances of an area around the autonomous vehicle. A display displays an image of the area around the autonomous vehicle generated based on the received detection data. The communication circuit transmits, via the network to the autonomous vehicle that is being remotely operated, a control command including an amount of operation obtained by correcting, based on characteristics of the autonomous vehicle, an amount of operation applied to an operation accepter by a remote operator.

US 2021/116907 A1 shows a vehicular Artificial Intelligence (Al) unit, which is configured: to receive inputs from a plurality of vehicular sensors of a vehicle; to locally process within the vehicle at least a first portion of the inputs; to wirelessly transmit via a vehicular wireless transmitter at least a second portion of the inputs to a remote tele-driving processor located externally to the vehicle; to wirelessly receive via a vehicular wireless receiver from the remote tele-driving processor, a remotely-computed processing result that is received from a remote Artificial Intelligence (Al) unit; and to implement a vehicular operating command based on the remotely-computed processing result, via an autonomous driving unit of the vehicle or via a tele-driving unit of the vehicle.

As noted above, classical teleoperation, i.e. center-to-vehicle (C2V) teleoperation, is a known means to remotely operate vehicles from a teleoperation center or to provide support/emergency instructions from the teleoperation center to a driver of a vehicle. For example, US 2015/0248131 A1 combines C2V teleoperation with autonomous vehicles to provide remote support to a passenger of a vehicle or to remotely operate the vehicle from the teleoperation center, if a predetermined situation is identified by the vehicle. However, such a system lacks flexibility when it comes to abnormal situations during which the autonomous driving cannot be employed, *inter alia,* because it is not possible to predetermine all possible situations during which/for which the vehicle should require remote assistance, the support may not be provided as quickly and as efficiently as needed, and the remote operator cannot provide on-site assistance. Further, the costs for a teleoperation center may be high.

### Problem and Solution

It is an object of the herein described disclosure to provide a vehicle and a system with a plurality of such vehicles which overcome the above discussed points. In particular, it is desirable to provide a technical solution according to which, among other technical advantages, the vehicles are improved offering a wide range of flexibly selectable control modes and so that they can automatically request for assistance/supportwhen an incident should occur which prevents autonomous driving and, the system of such vehicles should enable that assistance can be provided flexibly, quickly and preferably adapted to the type of the incident.

The invention is set out in the appended set of claims.

The following aspects are in particular provided:
According to a first aspect, there is provided a vehicle comprising a control device which provides an autonomous driving mode, a manual driving mode and a vehicle-to-vehicle teleoperation driving mode. These modes can be flexibly and preferably automatically activated. In the autonomous driving mode, the driving of the vehicle (which may also be named "ego vehicle") is controlled automatically, i.e. the driving is automated and the automated/ autonomous driving function may be provided by one or more units or subunits of the control device or by separate unit included in the vehicle and/or in a remote server. In other words, the autonomous driving mode controls the vehicle without or as far as possible and/or legally allowed without intervention from a human driver. In the manual driving mode, the driving of the vehicle is controlled (mainly) by a driver. The terms driver and operator may be used interchangeably in the following. in the vehicle-to-vehicle teleoperation driving mode, briefly "V2V teleoperation", the driving of the vehicle is remotely controlled by a human driver who is located in another vehicle, wherein the term other/another vehicle shall indicate that it is not the vehicle/ego vehicle. However, it is noted that the driver of the ego vehicle may use the V2V teleoperation equipment of the ego vehicle to control the ego vehicle, if a situation may require such measures.

Further, the vehicle may include a support request unit, which may also be named "abnormal situation detection unit", and it may be configured to issue a support request to a driver of another vehicle, if an incident, i.e. an abnormal situation, is detected that prevents the use of the autonomous driving mode, in which the vehicle operates normally, i.e. when there is no incident. In other words, in case that an abnormal situation has been detected which does not allow to continue or start autonomous driving, the support request is issued and assistance can be required thereby. The request, preferably and as further explained below, may be issued to a mobile device of the driver and/or to a cockpit or other output unit of the other vehicle. The driver of another vehicle, the other vehicle or any unit which receives a support request may be named "recipient" and any target of a support request transmission may be named "intended/target recipient".

Further preferably, the support request is only issued if an incident has been detected by the support request unit and if there is no driver located in the ego vehicle. The second condition may help to prevent that a support request is issued even though the driver of the ego vehicle can provide the support personally which may be faster and more efficient. For example, if there is a malfunction of a sensor or the like, e.g. due to a blocked camera, the driver of the ego vehicle may simply provide on-site assistance by removing the item which blocks the camera, the driver of the ego vehicle may take over manual driving if the autonomous driving is not possible, or the driver of the ego vehicle may control the ego vehicle with the V2V teleoperation equipment. Even further, in another alternative, the support request may be issued to a driver of another vehicle and to the driver of the ego vehicle, and the driver of the ego vehicle may accept the request so that a driver of another does not need to perform remote support or on-site assistance.

Further, with the vehicle's technical configuration to enable V2V teleoperation, the request for assistance, i.e. the support request, may allow the recipient of the request to flexibly decide about the best solution and the driver of another vehicle may take over the driving control remotely from the other vehicle (which drives in autonomous mode during this time) or the driver may decide to provide on-site assistance which is also quickly possible because the driver may be close to the vehicle that requires support. The support request may even be configured to include an indication about the preferred kind of support and the indication may be added to the support request automatically, and/or the support request may include information which allow the recipient to judge about the incident personally. In other words, the vehicle is configured to provide different driving modes and to issue a support request in any kind of abnormal situation, which does not even be predetermined which would reduce the flexibility in view of unknown or unforeseen incidents. The assistance can be provided quickly and flexibly accordingly and due to this technical configuration.

Further, the vehicle may include sensors to sense the surroundings thereof. The surroundings may be the vicinity around the vehicle or certain areas in front, above, behind and/or at the side of the vehicle. The sensors may be of different types and they may include "lidar" devices, "radar" devices, camera(s), position sensors, weather sensors or information acquisition units about the weather or the forecast, and further kinds of sensors.

The support request, i.e. the data transmitted therewith, may include information about the incident which may be configured to enable the driver of another vehicle, who has received the support request, to select the apt kind of support including, e.g., on-site assistance or vehicle-to-vehicle teleoperation driving. The information about the incident, e.g., may include pictures, videos or live camera views from the vehicle for which an incident has occurred, and/or the information may include sensor measurement data, weather data or the like. The information may also be, preferably, composed based on the type of the incident. For example, if the support request unit should detect a malfunction of a camera, e.g., the pictures are all totally black, grey or white'or so, the support request unit or any other unit of the vehicle may discern that the camera has a malfunction and it may send only the pictures of the camera together with the support request to reduce data volume and reduce the transmission time.

Providing the sensors and the possibility to add relevant information to the support request, preferably flexibly composed depending on the type/kind of incident, improves the flexibility of the system because the recipient of the request has all necessary information at hand to select the best solution strategy, i.e. type of assistance. It is not necessary to predetermine rigid and fixed solution protocols for predetermined incidents so that even unforeseen incidents can be properly and quickly resolved.

it is noted, which is also further discussed below in connection with a another preferred configuration, that the support request may include an indication for the best possible assistance type, however, it is preferably possible that the human recipient of the support request may "override" the indication, i.e., select a type of assistance which he/she finds most suitable.

Further possible information contained, preferably, in the support request, i.e., the transmitted data, may include the vehicle ID, the vehicle location/position, the type of incidence including sensor/image data of the vehicle, a priority score, and/or the like. The priority score may be determined, e.g., based on the type of the incident and the urgency of the assistance so that, e.g., if more than one support request from different vehicles should be received by a single recipient, the recipient can decide about which support request should have priority.

Generally, as it is known in the art, the determination/detection of an incident and the determination of the type of the incident may preferably be performed by a unit or a sub-unit included in the vehicle, very preferably the support request unit, or in a remote server, to which the relevant data are sent from the vehicle, e.g. sent from the support request unit. And, such unit may be a computing unit that processes the data based on determination algorithms, and/or which includes an artificial intelligence/a machine learning unit trained to detect and/or differentiate different kinds of incidents. The training may be performed using data from real driving situations or driving data from a simulator.

Further, the ego vehicle may further include sensors to sense the surroundings, and the control device may be further configured to determine the type of the detected incident based on the sensor data, as already discussed above. The flexibility and reliability in view of selecting the apt incident response is further improved by the above described options for configuring the support request and when adding relevant data, such as sensor data. The recipient of a support request thereby receives enough information to select the best possible solution/measure based on the automatic determination about the type of the incident.

Further, if automatic determination of an incident type is provided, the support request unit may add further data to the support request including an indication whether on-site assistance or vehicle-to-vehicle teleoperation driving is required/preferred depending on the kind of detected incident. The type/kind of the incident may be determined based on, preferably, sensor data, environmental data, position data of the ego vehicle and/or the like. Some examples for indications are provided in the following, however, it is noted that, for example, other incidents may happen that require other indications or it may be indicated that no indication is possible and the recipient needs to decide without indication. The examples of a possible indication policy may include:
- In case a blocked (driving) path situation has been determined, the support request may not include any indication so that the driver of another vehicle selects whether, e.g., on site assistance or vehicle-to-vehicle teleoperation driving is needed. Alternatively, it may also be possible to indicate, when a blocked path incident has been detected, that an on-site assistance indication is included in the support request or a V2V teleoperation driving indication.
- In case a high risk driving area has been determined, the support request may include the indication that vehicle-to-vehicle teleoperation driving is preferable.
- In case a malfunction of a component of the ego vehicle has been determined, the support request may include the indication that on-site assistance is preferable.
- in case a bad weather situation has been determined, the support request may include the indication that vehicle-to-vehicle teleoperation driving is preferable.

It is noted that the term "on-site assistance" shall, in particular, include the meaning that a person will provide assistance to enable the continuation of the (autonomous) driving of the vehicle and that the assistance is provided at the position of the vehicle. For example, in case a plastic bag blocks a sensor of the vehicle which requires support, a driver of another vehicle who is recipient of the support request may go/drive to the vehicle having the blocked sensor to remove the plastic bag or to perform other kinds of repair jobs. The term "vehicle-to-vehicle (V2V) teleoperation driving" shall be understood that the vehicle which has requested support will be driven by a human driver/operator of another vehicle from the cockpit of the other vehicle. This may be needed, e.g., if the driving path of the vehicle is blocked and the autonomous driving control is unable to find a way around the blocking element which, however, may be possible for a human driver or, e.g., if the weather is too bad or an area is very crowded by pedestrians or so (high risk area) so that a human driver may navigate said area more safely than the autonomous driving control.

A preferred operation procedure/method may include the following steps: when the support request unit detects that the ego-vehicle is in a high risk area, or that a component has a malfunction, the support request unit outputs the support request indicating the need for V2V teleoperation to another vehicle in which an operator (driver) is on board. If the operator of the other vehicle is available, the operator accepts the request for V2V teleoperation and performs the V2V teleoperation based on teleoperation information that is outputted from a teleoperation device of the other vehicle in which the accepting operator is present. The teleoperation information may include a live stream of images, sensor data and the like of the ego vehicle which are displayed/outputted in the other vehicle, e.g., on a screen of a teleoperation cockpit or the like.

Further, when it has been detected that the ego vehicle has a component malfunctioning, the ego vehicle may send the support request for on-site assistance (also named "presential" assistance) to an operator that is outside of ego vehicle.

Further, if it has been detected that the ego vehicle is ahead of/in a blocked path, the ego vehicle outputs the sensor information sensed by the plural types of sensors to an operator of another vehicle so that the recipient can decide about the best assistance.

It is evident from the above that any kind of incident can be addressed and solved flexibly and quickly because the recipient of a support request is perfectly supported in view of the decision of the type of the needed assistance and the assistance can be selected to resolve the problem/incident most efficiently and effectively. No predetermined rigid assistance procedures are necessary and since other drivers are available, unlike in a situation where vehicles are only operated from a teleoperation center, it is even possible that fast on-site assistance can be provided. An expensive teleoperation center is not necessary, however, it could be added to provide a further option for assistance; i.e. in addition to the above described options including on-site assistance and V2V teleoperation and it would then be possible to select teleoperation from a center (C2V teleoperation) as well.

Further, the support request unit may issue/transmit/send the support request either via unicast or multicast. There are different preferred options in view of the selection of the sending mode including that the "sending policy" is predetermined based on a table or the like which defines the situations for which unicast shall be used and the situations for which multicast shall be used. Further, alternatively, it is possible that the configuration is such that the kind of detected incident determines the sending mode which may also be defined in a table. In both of the above options it may also be defined in the table or database or the like that, if an "unknown/undefined" incident has occurred, the sending mode shall be either multicast or unicast so that the flexibility is maintained and even unknown incidents can be handled. Even further, very preferably, the above options can be combined so that the predefined sending policy and the type of the incident are both used to determine the sending mode.

A table, a database or any other type of option for storing the above policies may be stored in a memory of a computing unit of the vehicle or it may be stored in a memory of a remote server to which the vehicle communicably connects when the information shall be read/is required.

The option of using different sending modes even further supports the flexibility of the herein proposed disclosure because different incidents or general "conditions" may render a unicast support request more effective and efficient than in other situations, and vice versa. For example, if statistics of a certain system of vehicles or a certain area suggest that on-site assistance was required quite often in the past and about as often as V2V teleoperation for solving a problem, the "sending policy" table may indicate that the unicast sending mode is generally to be used and that the closest driver/operator of another vehicle should be the primary (highest priority) target recipient. Further, if a high number of assistance/support requests is expected, and in case that the number of on-site assistance and V2V teleoperation will be about the same, a multiple unicast mode may be indicated in the sending policy table targeting the most relevant, e.g. closest, drivers of other vehicles. Even further, if most requests can be solved by V2V teleoperation and the system size is large (e.g., > 100 vehicles) and/or a high number of support requests (e.g., > 100 per day & vehicle) is expected, it may be indicated that multicast is most suitable to reduce the number of human assistors, and, possibly, the system may be further supported by an additional teleoperation center for adding the option of C2V teleoperation in case of support request peaks. In addition, if bad weather or other reasons may increase the frequency of support requests, it may also be possible to assign more human drivers, as possible "assistors", temporarily, especially in a public transportation system.

Further, the ego vehicle (and all other vehicles) further may have a management table provided to contain, for the vehicles in the system, vehicle identification information, such as an ID of each vehicle which is within the system or an assigned group of vehicles, operation mode information, to indicate the driving mode of the vehicle, such as manual or autonomous, operator/driver on board information, to indicate whether there is a driver on board or not, and operator/driver status information, such as driver is free/available for assistance or not, and the support request unit may further be configured to send the support request based on the information of the management table and/or a location information of each other vehicle, preferably in case of a unicast sending mode. The management table may alternatively be provided in a remote server system so that it is centrally accessible for each vehicle, However, it is preferable to provide the management table in each vehicle. Even if the communication failure is occurred between vehicle and the remote server, this system can operate by using direct communication between each vehicle.

The management table, database or the like hence provides a reliable and non-complex option to allow an efficient coordination of the support request sending. This applies even more in case of a unicast sending mode because, e.g., the sending of the support request preferably considers the information from the management table and, e.g., will not select a driver who is not available, as a target recipient and/or the locations of other vehicles may be used to determine the closest vehicle which is then used as the primary/priority target recipient for sending the support request. Further, if it is indicated in the table that a vehicle does not have a driver, the vehicle may be disregarded as a target recipient.

For example, in a preferred method for determining the target recipient, the ego vehicle (or a dedicated unit/sub-unit for this task) may (step 1) receive location/position data of each vehicle from a control server which stores the management table if the management table is stored centrally at a remote server. Otherwise, if the management table is not stored centrally but in each vehicle, the ego vehicle simply looks up the information in the management table stored in a storage space thereof. (step 2) The management table is used to check the availability of the operators/drivers and rank them by relevance, which preferably includes ranking them by distance to the ego vehicle, (step 3) The most relevant, e.g. closest, available driver/operator is determined and the support request is sent thereto, which may include sending. the support request to the vehicle of said driver/operator and/or to the mobile device of him/her.

Such a method as described above provides, within few operation steps, a selection of the most suitable (primary) target recipient. This enables fast and efficient support at low complexity and negligible computing efforts.

Further, the ego vehicle, and all other vehicles or a remote server, may comprise a priority table that includes priority information about possible support request recipients. Then, if the support request is to be sent via unicast, the support request is first sent to the recipient with the highest priority in the priority table. This may speed up the selection of a target recipient even further than in case of using the above management table at even less computing efforts. However, the priority table and the management table, very preferably, may also be combined so that, e.g., the priority table, in a first step, is used to select the driver/operator with the highest priority and then a cross check is carried out in a further step to find out, based on the management table information whether said driver is available or the like.

Possible procedures in regard of the priority table may include, e.g., that when it has been determined to unicast the support request (or in case that unicast is set as the default sending mode in advance or the like), the priority table is used so that the request is sent first to driver/operator who is in another vehicle with high(er) priority. Further, optionally, if said operator is not available or does not respond to the support request within a predefined waiting time, the request may be sent as multicast to the remaining operators/drivers or to next highest priority target recipient via unicast.

As will be explained in more detail below, the priority table may be updated regularly, and, e.g., preferably at least when the operator status or the operating mode of one of the (grouped) vehicles has changed, and when the priority table has been updated, the updated information is shared to all the priority tables in the other vehicles (if the table is not stored centrally on a remote server which would render said last step not necessary). The term "grouped" vehicles shall preferably relate to all vehicles which are communicably connected within the system formed by these vehicles.

Specifically, further, the management table and/or the priority table may be updated, preferably when a preset change/update event has occurred/has been detected. For example, the management table update events may include: change of the operation mode of a vehicle, lost connection between an operator's mobile device and the vehicle of said driver (if the mobile device is used to receive support request), detecting a new communication connection between an operator' mobile device and the vehicle, change of an operator's status, and the like. As noted above, in case the table is centrally stored, the updating can be performed centrally triggered by a request of a vehicle to change the table, while, in another option where each vehicle stores a copy of the table, the updated information/table is transmitted to all other vehicles which are in the system, i.e. which are grouped in the system.

The priority table events may include: the operator status or operating mode of one of the (grouped) vehicles has changed, the vehicle has been retired (at least temporarily). The updating can be performed according to the same alternatives as described above in connection with the management table.

The updating allows to ensure that support requests are transmitted efficiently reducing communication volume because lost or undeliverable support requests can be reduced to a minimum or even to zero.

Further, the ego vehicle may include a communication device which is configured for transmitting and receiving data wireless, and/or a cockpit including a driving device configured to output driving commands to the ego vehicle or to another vehicle, and a display configured to selectively display the surroundings and vehicle control data of the ego vehicle or of another vehicle. The driving device may be any kind of tool(s)/means which allow(s) to control a vehicle, i.e. it may be a steering wheel, it may be a "joystick", it may be an accelerator stick (in case of a metro or the like this may be sufficient to control the driving of the metro train), or it may be another option. In other words, preferably, the driving device is a hardware means to control a vehicle, however, it may also be a virtual button or the like provided on a touch screen/display. Further, the display may output sensor data, camera data and the like, i.e. all information which can be useful or necessary for controlling a vehicle. The two devices are also configured to allow V2V teleoperation which especially and preferably means that, in case of applying V2V teleoperation, the control data and data to be displayed are differently routed than in case of operating the ego vehicle. In even other words, in case of controlling the own vehicle or ego vehicle, the driving device may output driving command data/signals, as in case of a control-by-wire as known in the art, to the relevant devices/units of the own/ego vehicle so that the vehicle can be controlled. Further, the sensor, camera, and the like data of the own vehicle are displayed on the screen. And, in case of V2V teleoperation, said control data are not transmitted as control signals to the units/devices of the own/ego vehicle but they are sent, via the communication device of the own vehicle (as the transmitter) and the communication device (as the receiver) of the other vehicle (which is the recipient) to the respective units/devices. Vice versa the other vehicle sends its sensor data and the like to the display of the ego vehicle. As a non-limiting specific example, e.g., a driver of another vehicle wants to accelerate the train being the "ego vehicle" which is controlled via V2V teleoperation, the driver of the other vehicle will use the accelerator knob/stick to issue an acceleration command signal to the motor, however, said signal is transferred to the motor of the ego vehicle which is V2V teleoperated.

Optionally, the vehicle may also include a teleoperation device or cockpit which is only provided for teleoperation of another vehicle. This would allow to separate physically the operation components/driving devices for controlling the own vehicle and the operation components/driving devices for performing V2V teleoperation. This clear separation allows to avoid confusion of choosing the wrong device or the like, however, providing a mutual/common cockpit for control of the own vehicle and V2V teleoperation allows reducing the necessary physical space of the cockpit.

A dedicated teleoperation unit may be provided as well in addition to the control device of the vehicle which may be configured to manage/perform all task related to the V2V teleoperation, such as rerouting signals and so on.

Moreover, the vehicle may furthermore include other common units, such as further displays, electronic control units as usual in automobiles, trains and the like, further controls and sensors, a dedicated autonomous driving unit/module, if not included in the control device, and the like and as known from vehicles or the respective type. In other words, the herein described vehicle or control device of said vehicle may include the above units and the like in addition to the known configurations/equipment of a respective vehicle. The functionality of the present disclosure may even be added to an existing vehicle, e.g., by software update and/or by introducing the above described units in the form of additional hardware modules.

Further, the ego vehicle may include an interface configured to connect with a mobile device of the driver for data exchange, wireless or via wire, and when the mobile device of the driver is connected to the interface, such as the driver is logged in to the vehicle, the support request of another vehicle is displayed on a screen of the mobile device. Alternatively, the support request may be displayed on a display of the vehicle or both.

The above hardware configurations of the vehicle allow to enable the herein described support request functionality and V2V teleoperation functionality without largely increasing the complexity and in a way that a reliable operation in all driving modes is enabled.

Further, the control device of the ego vehicle may automatically send a rejection command in reply to a support request of another vehicle if the management table indicates that the operator status of the ego vehicle is not free/available. This may especially be a preferred option in a multicast sending mode because the ego vehicle which has issued the support requests to the many other vehicles instantly knows about the availability status of all other vehicles/drivers without needing to consult a management table or the like which reduces computing costs and time, especially in the scenario of a multicast sending.

A further aspect relates to a system including a plurality of vehicles according to at least one the above described options, wherein in some vehicles a driver is present and in some other vehicles no driver is present. The vehicles may be communicably connected with each other via a network, which may also be called "grouped vehicles". The network infrastructure may be a WAN or any other type of privately operated network, wherein private shall mean, e.g., a communication network operated by, e.g., the public transportation owner or the like. Such a configuration allows tailor-made security options and very high communication speed and low latency together with ensured bandwidth. On the other side, the communication network may also be a "public" one, which shall preferably mean/indicate the mobile communication network of a respective communication network operator, for example as used for mobile communication with smartphones and the like. This has the advantages that the system of the present disclosure can rely on existing infrastructure which saves costs and does not require to build an own network, however, it reduces the possibility for tailor-made solutions and may lack bandwidth, availability and the like.

Further, the system may include a teleoperation center for providing a teleoperation center teleoperation of one or more of the vehicles (where the number of vehicles that can be simultaneously teleoperated from the teleoperation center is limited by the number of operators in such center), preferably as an additional option to the V2V teleoperation. In this case, the control device of the vehicles in the system may include another driving mode, the C2V teleoperation driving mode, which however may be configured like the V2V teleoperation driving mode, and the management table may then include another entry indicating the status of the operator(s) in the teleoperation center. Further, the support request may offer the additional option to indicate that C2V teleoperation is requested or preferred, which may be the case if no driver of another vehicle is indicated as available in the management table or the like. In other words, the C2V teleoperation may add another option for ensuring reliability and continuity of the assistance.

### Brief Description of Drawings

- Fig. 1: shows in Figures 1a-c schematic examples of a vehicle, a controller and a cockpit of the vehicle.
- Fig. 2: shows two examples for a system, each system including a different kind of vehicles.
- Fig. 3: shows in Fig. 3a a system including trains, and in Fig. 3b a method for solving in incident.
- Fig. 4: shows a management table.
- Fig. 5: shows a method for selecting a recipient of a support request.
- Fig. 6: shows an example for a multicast support request when a high risk area is detected.
- Fig. 7: shows an example for a unicast support request when a high risk area is detected.
- Fig. 8: shows a multicast support request for a blocked path incident.
- Fig. 9: shows a multicast support request for a blocked path incident.
- Fig. 10: shows a multicast support request for a blocked path incident.
- Fig. 11: shows a procedure when a vehicle waits for on site assistance.
- Fig.-12: shows a procedure when a component malfunction is detected.

### Detailed Description of Exemplary Embodiments

In the following, preferred aspects and examples will be described in more detail with reference to the accompanying figures. Same or similar features in different drawings and examples are referred to by similar reference numerals. It is to be understood that the detailed description below relating to various preferred aspects and preferred examples are not to be meant as limiting the scope of the present disclosure.

### General description of the present disclosure and preferred aspects

The future of transportation will probably see the merge of two different paradigms: autonomous operation and teleoperation of vehicles. A (semi-)autonomous vehicle may operate autonomously 99.99 % of the time, but sometimes it may require human assistance to move forward or solve a problem. Such incidents or abnormal situations will be of very different nature and it is not possible to classify all possible types of incidents beforehand in a predetermined number of situations for which a predetermined action can be applied.

The present disclosure proposes an efficient way to handle these incidents flexibly, especially those which are not predetermined or which have not been foreseen within a list of predetermined incidents, by sending control requests to human assistors, also called "operator-teleoperators", who can solve the issue through teleoperation and/or on-site (also called "presential") assistance. The assistors are usually, within this disclosure, drivers of other vehicles. Hence, the herein-proposed solution leverages on-site assistance and remote assistance for autonomous and semi-autonomous vehicles with the objective to provide a more efficient, flexible and reliable service. As noted above, preferred possibilities for human assistance can be: Teleoperation (e.g.: controlling the vehicle in a crowded area); and on-site assistance (e.g.: remove a plastic bag that occludes a sensor of a vehicle, removing a blocking object in the driving path of a vehicle).

The system described, in particular, includes a plurality of participating/grouped vehicles, which shall preferably mean that the vehicles of the system are connected communicably with each other within the system. This may be achieved by a communication network, preferably a wireless network. Hence, here it is disclosed, in particular, a system in which the cockpit of the participating vehicles is configured for teleoperation with interchangeable modes for classic human operation and teleoperation. The teleoperation mode is (mainly) a V2V teleoperation mode, which means that, e.g., a vehicle "A" is teleoperated from another vehicle "B". The vehicles within the system all have the same or similar configuration with regard to the operation modes and the respective software and hardware needed for realizing the V2V teleoperation. The vehicles are preferably vehicles which are configured to drive autonomously whenever possible, that means, when no incident has happened/has been detected which prevents the autonomous driving.

It is a further technical advantage, that the herein proposed solution allows to exploit autonomous and semi-autonomous operation of the vehicles more efficiently since human operators/teleoperators are closer to the service vehicles than in a teleoperation center paradigm where vehicles are operated/controlled from a remotely located teleoperation center (i.e., C2V teleoperation) and which does not include the possibility for V2V teleoperation. Teleoperation shall mean, as usually known, that a vehicle is controlled/driven from a person which is not the driver of said vehicle, but a remotely located person. V2V teleoperation shall mean that the person being in another vehicle takes over the control of the V2V teleoperated vehicle; the latter will often be named "ego/own vehicle" in the following, while the vehicle in which the remote operator/driver is located may be named "other vehicle" in the following. C2V teleoperation shall mean that a driver, which is rather an operator in this case, will be in present in a remote stationary center which is equipped to operate a vehicle from said center.

With regard to the hardware configuration of the vehicles of the herein-described system, preferably, the teleoperation of an autonomous or semi-autonomous vehicle from another similar vehicle is improved by providing the same or at least similar cockpit equipment, at least with regard to the V2V teleoperation control equipment, to each vehicle of the herein proposed system. This supports a driver who takes over V2V teleoperation of a vehicle to perform the teleoperation safety and without the need for a time-consuming training. Each vehicle in the system may be preferably enabled to be used for teleoperation either as master or slave vehicle. With regard to the data flow during V2V teleoperation, it is preferred that information from different sensors and processing algorithms is sent from the V2V teleoperated vehicle to the remote displays of the teleoperator's vehicle, and likewise control actions from the teleoperator's cockpit are linked to the actuators of the teleoperated vehicle. In summary, every vehicle can be at least: Operated manually by a driver (classic operation), operate (semi-)autonomously, V2V teleoperated from another vehicle, and used to V2V teleoperate another vehicle.

A specific implementation example of the present disclosure may relate, as a non-limiting example, to a railway system including a plurality of railway vehicles. For example, the railway system may be a rail transportation line with high frequency of vehicle movements, the line may be circular or bidirectional without further particularities, such as it may be the case for urban metro lines or the like. This non-limiting example will be used to describe a possible incident handling method further below.

### Configuration of vehicle(s) of the system according to the present disclosure.

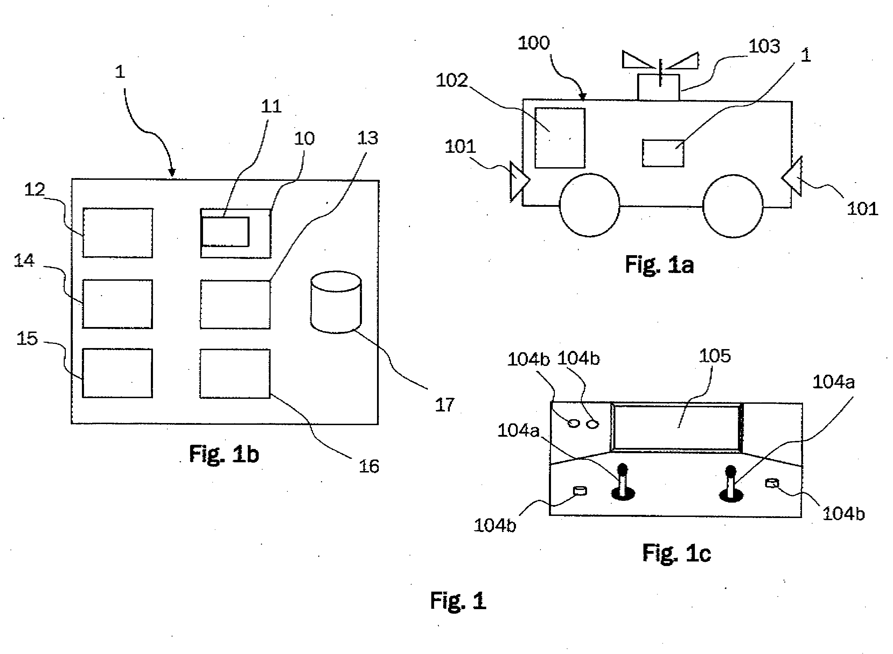

Figure 1a shows a schematic vehicle 100 of the present disclosure, Figure 1b shows a schematic representation of a possible configuration of a controller 1 of said vehicle 100 including different control devices and units which will be explained later, and Figure 1c shows a schematic representation of a (teleoperation) cockpit 102 of the vehicle 100.

The controller 1 as shown by Figures 1a, 1b can provide different technical functions via devices, modules or units which may be integrated into a single controller hardware or which may be separate entities. Also the distribution of devices and the like as shown in Figure 1b is not mandatory and the devices/units and the like may also be arranged differently, such as some of the devices/units shown may be merged or further distributed over other entities. In other words, the architecture as shown is schematic and the units and devices may be arranged differently without departing from their intended technical function. The devices/units/modules and the like which are shown may be configured by hardware and/or software, preferably they are configured by one or more processors and internal and external storage space(s) for storing the computer programs and for saving databases, and the like. Further, the controller 1 may be a single unit or may be split in a plurality of units which may also be locally distributed over the vehicle 100. In Figure 1a, the controller is shown as a single unit as one possible example.

With regard to the configuration of the controller 1 and connected components of the vehicle 100, a possible configuration example is shown by Figure 1b and different technical functionalities can be organized within different hardware devices/units/modules, such as:
1) AD ECU 12 (Autonomous Driving Electronic Control Unit) refers to the computer or set of computers that perform the bulk of the calculations required for perception, localization and trajectory planning required for autonomous operation of the vehicle. The AD ECU 12 can operate in accordance with known principles of autonomous control of vehicles.
2) The controller 1 may be connected communicably to one or more sensors 101 as shown in Fig. 1a. The list of sensors 101 is defined, among others, by the autonomous operation requirements and therefore will vary according to the type of vehicles and deployment scenario, it may include passive optical sensors 101, such as camera, stereo camera, event-based camera, active optical sensors 101, such as like LiDAR, RADAR, SONAR, GNSS / INS and IMU, and the like.
3) The communication infrastructure (not shown) of the system may include private wireless area networks (WAN) when the application allows it. e.g. in case of public transportation system in a city, vehicles 100, 150-158 operating in a mine, or the like, or the use of public networks, preferably having a high-speed bandwidth, like 5G, through telecom providers. The controller 1 may include or may be connected to a communication device 103 which allows to connect the vehicle 100 communicably to the above communication infrastructure so that the vehicle 100 can exchange data with other vehicles of the system and, if available, a teleoperation center or a remote server (not shown).
4) The control device or teleoperation ECU 10 refers to the computers and routers in charge of communication with other vehicles, its responsibilities may include sharing information on the status of the different vehicles and the location of human assistors, together with the transmission of information for teleoperation. The teleoperation ECU 10 functionality may also be integrated into other units so that a dedicated teleoperation ECU would not be necessary. Further said teleoperation ECU, also called control device 10, may integrate the technical functionality for selecting and providing different control modes of the vehicles 100, 150-158 and preferably, a support request unit 11, may be a sub-unit of said control device 10.
5) Controls or driving devices 104, as shown in Figure 1c, refer to all the devices which are present on a vehicle driven by a human for controlling the vehicle manually. Here, Fig. 1c shows control sticks 104a and buttons 104b.
6) A cockpit 102 for teleoperation and/or for the driver of the ego vehicle is also provided which includes display(s) 105 on which sensor data are displayed and which are required to allow a human to teleoperate a remote vehicle 150-158 from the cockpit of his current vehicle 100 (where he is on board, which may be operating autonomously or be at stop), and to drive the current vehicle 100 in standard operation (human driving) with minimal changes among both modes. A possible implementation could use the same displays 105 for teleoperation and standard/manual operation, without the traditional windshield window to avoid interference of sensations to the human operator. Likewise, the cockpit 102 may be as much isolated as possible from vehicle vibrations to avoid confusing sensations while teleoperating a remote vehicle 150-158 from an autonomous vehicle in movement. A possible schematic of a cockpit 102 is shown by Figure 1c which shows, exemplarily, control buttons 104b, driving sticks 104a, and a display 105.

Further, the controller 1 of the vehicle 100, as shown in Fig. 1b, may include a storage device 17 for storing data locally in the vehicle 100 and other control units 13-16 which may have different technical tasks, such as communication and sensor data control, engine control, brake control, trained artificial intelligence (Al) or machine learning unit (ML), and the like. Further, one of the units 13-16 may also be an interface for establishing a communication connection between a mobile computing device of the driver with the cockpit 102 or the vehicle 100.

Summarizing, the vehicle 100 may include a control setup which is based on known autonomously-driving vehicles of the respective type, such as trains or cars, and in addition the controller 1 or the control device 10 may include the additional control modes for V2V teleoperation and for performing the detection of an incident and for issuing support requests as well as the hardware to enable V2V teleoperation of another vehicle 150-158, including driving devices 104, communication device(s) 103 and a cockpit 102 for V2V teleoperation, which may be shared with the normal cockpit for the manual driving mode in a preferred example. A support request unit 11 may be integrated into the controller 1 as a sub-unit or may be part of one of the other units, such as the teleoperation ECU 10. The support request unit 11 may preferably be configured to detect incidents, to determine a type of the incident (if possible automatically) and to issue a support request as well as to handle incoming support requests. The support request unit 11 or any other part of the controller 1 may include a trained Al or ML unit which were trained to detect incidents and/or to determine the type of an incident. The training data used for such purpose may be gained from test drives with the real vehicles or in a simulator, wherein the test driver highlights incidents during the test drives so that the AI/ML can be trained. Otherwise, general computer program algorithms and procedures can also be used, i.e. without the use of an Al or ML, for the detection of incidents and the determination of their type in accordance with known principles. For example, a blocked driving path could be detected if the respective sensors 101 of the vehicle 100 detect that an object is placed in the future driving path or if sensors measurements are out of a normal range, it may be concluded that they have a malfunction, and so on. The respective programs can be stored in a storage space 17 of the vehicle 100, such as shown in Figure 1b, or they can be stored remotely, e.g. in a remote computer ("cloud computer").

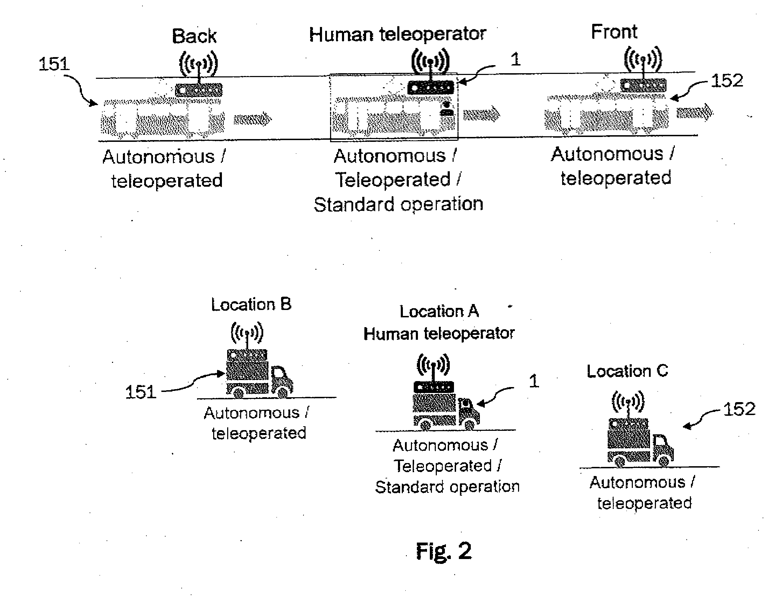

Figure 2 provides two examples of two different systems which fall under the present subject-matter, one system including public transportation trains, the other system shows a system including trucks. However, the general principle is the same irrespective of the type of the vehicle 100 and it is indicated schematically for both example systems of Figure 2 that there are vehicles 151, 152 which do not include a driver and that there is a vehicle 100 in which a driver is present. Of course, the system can include less than three vehicles and, preferably, much more vehicles than the three shown in the examples of Figure 2. Further, the preferred ratio of unmanned vehicles 100, 150-158 to vehicles 100, 150-158 in which a driver is present can be flexible and can be determined on a day to day basis. For example, if it is expected that a lot of support requests may be issued on a specific day, e.g. due to expected bad weather or the like, a public transportation provider could schedule more drivers on said day compared to other days during which less/normal amount of support requests are expected.

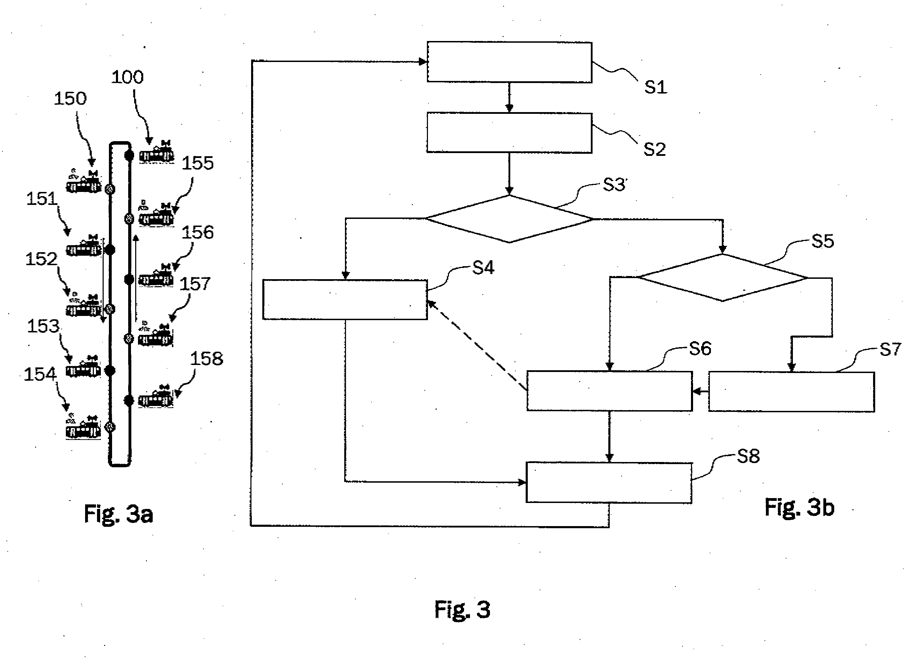

Figure 3 shows a possible implementation of a method which may be performed by a computer program product run by one of the units/devices of the vehicle 100, preferably within the support request unit 11 or the control device 10. The application scenario concerns a circular public transportation line with 10 vehicles 100, 150-158 and 5 driver, teleoperators (or driver or operator) as shown in Figure 3a. Here, vehicles 150, 152, 154, 155, 157 include a driver, the vehicle 100 will face an incident being the "ego" vehicle, and vehicles 151, 153, 156 and 158 do not have a driver. The number of vehicles, drivers, and the type of system is an example and may be different. The vehicles 100, 150-158 run autonomously which is the default mode (no incident). Upon the detection of an incident preventing autonomous operation, the vehicle 100 facing an incident sends a support request for assistance. Operator-teleoperators may receive the support request (briefly: request) from their current vehicle 100 or from a remote one 150-158. The available operator-teleoperator may accept the request, if the incident cannot be solved by teleoperation the operator-teleoperator may raise a request for on-site assistance that is sent to the most relevant operator-teleoperator to the respective vehicle. e.g. the closest one. A more complex policy for sending and receiving assistance requests may be proposed for the particular implementation depending on; a) the number of vehicles versus the number of assistors, b) the frequency and nature of requests, c) the proximity of assistors to remote vehicles.

Operating Method for the generation and distribution of support requests:
Figure 3b shows a preferred method. At S1, all vehicles 100, 150-158 operate autonomously as the default operation mode. Upon an incident that prevents safe autonomous operation of the ego vehicle 100, a support request is generated and transmitted (S2) to human assistors which are drivers of other vehicles 150-158. The support request preferably contains basic information on the incident, such as the vehicle identification (ID), the vehicle location, the type of incident, a priority score, and/or the like. This information may be sent by the support request unit 11 of the vehicle 100 which requires assistance to another vehicle 150-158 and/or to a mobile device (not shown) of a driver of a vehicle 150-158, like a cell phone through a telecom operator, and/or through a private wireless area network (WAN) deployed specifically for the transportation system. Requests can be sent to a single recipient or to several ones via unicast sending mode according to proximity and pertinence, or to all available assistors via multicast sending mode. Here, an assistor is preferably a driver (operator or operator-teleoperator) of another vehicle 150-158. Different request policies may be implemented for sending the requests according to the present disclosure. For instance, a single target recipient for the request may be targeted, e.g. the most relevant assistor in the example of Figure 3a would be the closest one 155 to the vehicle 100 in the opposite direction of movement, in other words: the assistor who is already on board if there is one, or the assistor on board the following vehicle otherwise, when the assistor does not accept the request after a given time, the request can be re-assigned to the following most relevant assistor and so on. The arrangement of assistors' relevance for a given vehicle may also be calculated by an algorithm upon control request generation considering different factors, like proximity of assistors to the ego vehicle sending the request. For that, the location of the assistors can be determined using the WiFi connection of their mobile devices and a WiFi router on each vehicle. Control requests may also be assigned a priority score to distribute them efficiently to the available assistors.

If the recipient of the support request finds out that teleoperation can solve the incident, the V2V teleoperation is requested by the recipient of the support request and, if accepted by the ego vehicle 100, activated (S3, S4). If, however, in step S3 the answer to the question whether teleoperation can solve the problem, it is proceeded with S5 which is another question as to whether the incident happened at the ego vehicle 100, if "yes" and if a driver is on board of the ego vehicle 100, the driver may provide on site assistance himself/herself. If, however, the driver of another vehicle 150-158 is required to provide on site assistance, e.g. because the ego vehicle 100 does not have a driver, the other vehicle 155 will drive to the ego vehicle 100 (S7) and then provide on-site assistance (S6). Further, the dotted arrow in Fig. 3b indicates that after the on-site assistance it is also possible to continue (temporarily) with teleoperation according to S4. Otherwise, the procedure continues with the reinitiated autonomous driving S8.

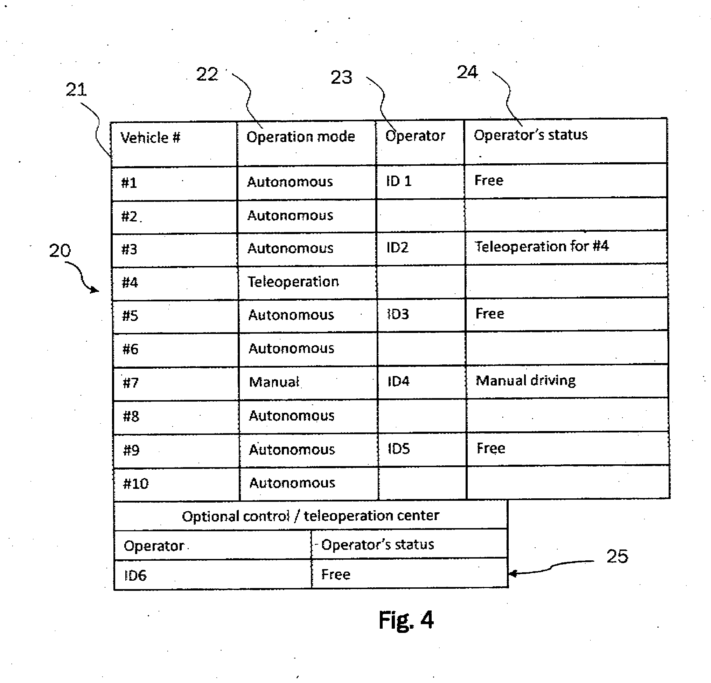

One option for realizingan efficient support request distribution according to the present disclosure may rely on providing a management table 20 to the storage space 17 of each vehicle 100, 150-158 or to a remote server (not shown), which is shown in Figure 4. Said management table 20 may provide an overview accessible for each vehicle 100, 150-158 about the ID 21 of each vehicle 100, 150-158 in the system, its operation mode 22, data about whether an operator is present 23, and the status of the operator 24. Further, if C2V teleoperation is additionally provided, the management table 20 may also contain a section 25 with regard to the operators in the center and their status/availability.

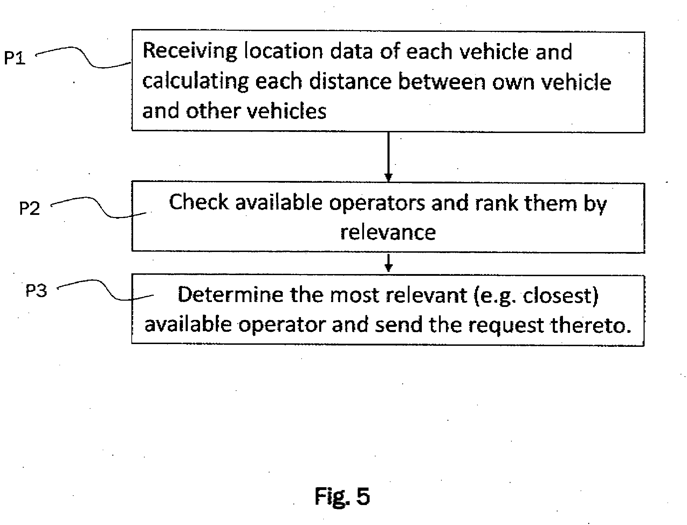

Using the information from the management table 20 as shown in an example of Figure 4, the above described method of determining the preferred/primary target recipient can be processed including mainly the procedural steps (P) as shown by Figure 5, i.e. receiving location data of each vehicle and calculating each distance between the ego vehicle 100 and each other vehicle 150-158 (step P1), check available operators and rank them by relevance (step P2), e.g. proximity/distance, and determine the most relevant (e.g. closest) available operator and send the request to the corresponding vehicle 150-158 having the determined ID 21 (step P3).

Further, a priority table which is not shown may also be provided in which priorities for the target recipients are included so that the information of the priority table may also be used in combination with the management table information or alone. For example, if a priority table is provided, the steps of Figure 5 may not include the determination of the distance/relevance but the most relevant target recipient may be determined based on the priority table information.

Further, the sending mode may be determined case by case, e.g., by the teleoperation ECU 11 or any other component of the vehicle 100, or it may be predetermined by the system supervisor for a certain time, e.g. one day or the like, or permanently, e.g. only unicast sending mode is used. The adaption of the sending mode may be determined based on sending policies which may include the examples as follows:
a) On-site assistance is required as often as teleoperation => Unicast, send request to the closest assistor available (or assistor on a following vehicle);
b) High number of assistance requests (e.g. > 100 per day & vehicle), even need of teleoperation & On-site assistance => Multiple unicast targeting the most relevant assistors;
c) Most requests can be solved by teleoperation => Multicast (minimize number of human assistors);
d) Most requests can be solved by teleoperation and big system size (e.g. > 100 vehicles) and high number of assistance requests (e.g. > 100 per day & vehicle) => Multicast (minimize number of human assistors), and combine with teleoperation center
e) Bad weather => Assign more human assistors on duty to be able to handle more assistance requests

Operation of the acceptance of support requests:
Upon a support request reception, the recipient/assistor may accept it or reject it using his mobile device. Alternatively, the support request is indicated on the display of the cockpit and can be accepted or rejected via the cockpit or the display thereof. Upon request acceptance the assistor will go to the cockpit 102, if not already present, of the vehicle (not the ego-vehicle which sent the support request) and run the procedure to control the requesting vehicle (note that the requesting vehicle may also be the same one where the assistor is on board). If the requesting vehicle 100 is not the same one where the assistor is on board, the assistor may run the V2V tele-operation procedure on the cockpit 102 of his vehicle to connect the displays 105 and cockpit 102 to the remote vehicle 100 that raised the control request. He/she may then solve the issue by V2V teleoperation, or drive towards the requesting vehicle 100 to provide on-site assistance (e.g., as shown in the example provided in Figure 3). If a teleoperation center exists (not shown), the assistor may control a remote vehicle either from another vehicle 150-158 or from the teleoperation center.

Types of control requests:
incidents preventing autonomous operation may have different nature that can be used to classify them on different types. However, the system is flexible and non-classified incidents may also be handled because the recipient of a support request receives information enabling to select the best possible solution for overcoming the incident/problem. However, predetermined incidents may be saved in the storage space 17 of the vehicles 100 or of a remote server of the system for increasing response speed in case of predefined incidents happening.
1) High risk area incident: The support request may be generated according to an implemented operation policy which may differ between busy urban areas, like city center, commercial areas, residential areas, rural areas and countryside with little human activity. A high risk area may preferably relate to an elevated risk of difficult driving operation, e.g. due to high traffic or many people possibly blocking the drive path, etc. As an example, a support request can be generated in a busy commercial area upon a certain risk score is met, such risk score may be a function of the number of dynamic objects traversing the path at a given distance range in front of the moving autonomous vehicle 100, the number of dynamic objects in the proximity of the planned path, the velocity of the autonomous vehicle 100, and the relative velocities of the dynamic objects in the proximity of the autonomous vehicle 100, among others. Such policies may be implemented through a risk score algorithm or risk score maps stored in the storage space, so that a support request is generated when a risk score threshold is reached. The procedure to compute the risk score will depend on the area where the vehicle 100 is (different areas may be mapped and classified, where the autonomous vehicles may be localized with respect to the map either with global positioning like GPS, CNSS, or with local positioning, e.g. map-based localization). The procedure based on which the risk score is computed may also consider the type of vehicles, such as tram, train, shuttle bus, etc., and the types of risks of the areas of deployment.
2) Blocked path: an autonomous vehicle 100, 150-158 may stop due to blockage of its path. A policy on how to react to this situation can be implemented considering the type of vehicle, such as tram, train, shuttle bus, etc., and the current location on the map. For instance, a waiting time can be programmed before sending a request to let the blockage resolve (e.g. a car blocking the path). The generation of a support request may also be dependent on whether the blocked autonomous vehicle 100, 150-158 is also blocking other vehicles, e.g., at an intersection.
3) Component malfunctioning: may be generated when a component, such as a sensor 101, is not working properly. For instance, a vital sensor 101 is occluded by an unknown object (e.g. a plastic bag carried by the wind), and such an incident highlights in particular the benefits of the present disclosure enabling efficient resolution for an incident. Other examples of component malfunctioning which may lead to a respective support request may be generated when a component is not responding, when two redundant devices or modules do not provide corresponding outputs, or when the communication latency required for teleoperation is above a certain threshold, Component malfunctioning control requests will often require on-site assistance, nonetheless, the assistor can start addressing the issue remotely while his current vehicle 150-158 drives autonomously towards the requesting vehicle 100, or perform minimal V2V teleoperation tasks to move the requesting vehicle 100 away of a blocked intersection.

Preferably, the support request issued from a vehicle 100 includes an indicator which indicates the determined type of the incident, if it has been possible to determine the type of the incident by the control device 10 or a sub-unit thereof.

Further, if the vehicle 100, 150-158 does not provide automated determination of the type of an incident or in case the type could not be determined, the information send with the support request enables the recipient to determine the incident and to select the apt actions for resolving the issue. Hence, there is no situation with which the vehicle 100, 150-158 and the system described herein cannot deal which ensures quick reaction to incidents and reliable service at any time;

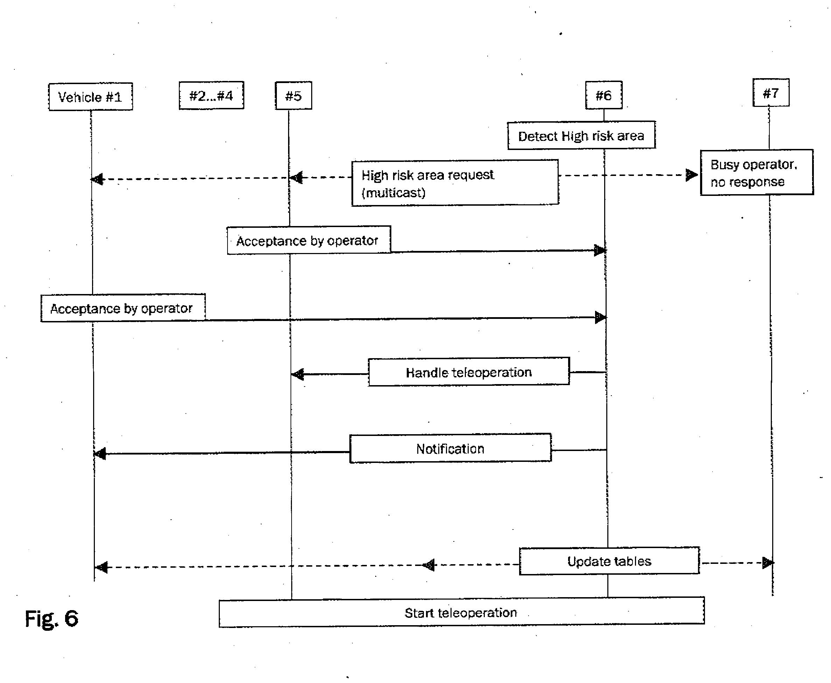

As noted above, in case of predetermined incident types, there can also be predetermined action policies, especially in view of the support request(s). Such predefined policies enable to increase the reaction/response speed because, e.g., the detection and identification of an incident may be processed more quickly by the control device 10 compared to an unforeseen incident. Figures 6 to 12 show examples of preferred action policies, i.e. methods, which address some possible incidents and the preferred exemplary actions to solve them.

Figure 6 shows an example method for addressing the detection of a high risk area when a multicast sending mode is preset or selected for transmitting the support request. Schematically, Figure 6 shows a system including seven vehicles 100, 150-158, in Figure 6: #1 to #7, and vehicle #6 detects to be in or in front of a high risk area and therefore issues a respective support request via multicast. This is depicted by the broken arrows which point to each vehicle in the Figure 6. Then, in this example, two operators/drivers, which are possible assistors, reply to the support request by accepting it, namely the drivers of vehicles #1 and #5. This is indicated by the arrows pointing back to the vehicle #6. Further, the operator/driver of vehicle #7 is not available/busy, but he/she does not need to respond because the system expects only a single acceptance. After having received an acceptance, or more, the ego vehicle 100 which has requested assistance enables the recipient of the request who has accepted it to perform assistance, e.g. in this case by way of V2V teleoperation. In the present example of Figure 6, since two drivers accepted the support request, one is selected and the other driver is informed via a notification that the acceptance has been rejected. In the Figure 6 this is the case for the driver of vehicle #1. The selection may be automated based on a predetermined policy, e.g., the faster acceptance reply is selected or the acceptance from the nearest other vehicle 150-158. After the V2V teleoperation has been enabled for the driver/operator of vehicle #5, the management table, and if necessary and provided the priority table, is updated on the remote server or in each vehicle of the system to indicate that the driver of vehicle #5 is busy now and to update the status of the vehicle #6. Subsequently, V2V teleoperation starts immediately and the driver/operator of vehicle #5 can navigate the vehicle #6 remotely through the high risk area, while the vehicle #5 continues autonomous driving.

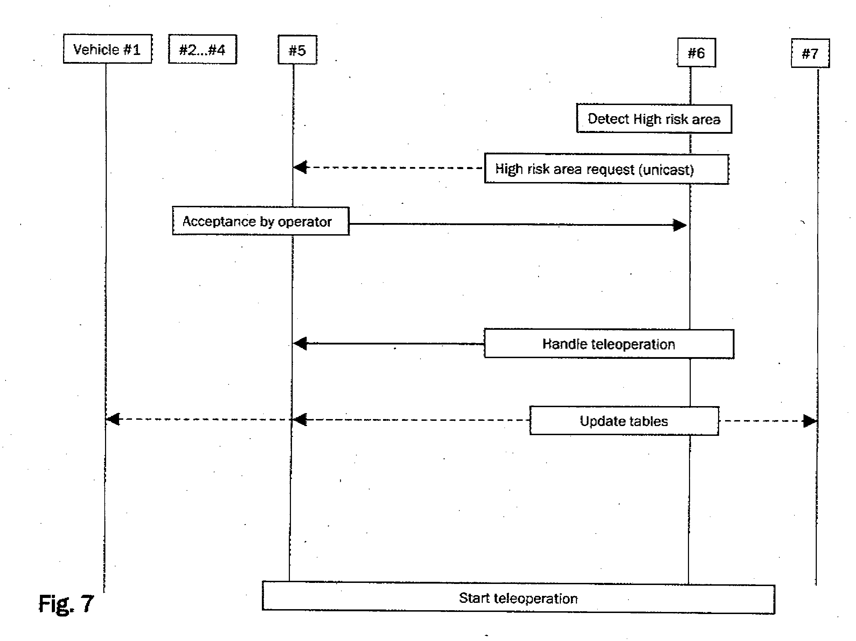

Another example is shown in Figure 7 relating to a high risk area incident as well, however, in this example a unicast sending mode is used. In this example, different to the procedure in Figure 6, the controller 1 or a sub-unit of the vehicle #6 looks up a priority table not shown which provides the ranking of target recipients, such as a ranking of vehicle IDs. In this case of Figure 7, the one with the highest priority, vehicle #7, has indicated in the management table 20 that the driver is busy, therefore the vehicle #5 is selected having the second highest priority and being available. Therefore, vehicle #5 is determined as the unicast target recipient of the support request and since, in the next step, the driver/operator accepts it, the V2V teleoperation is enabled and started and the tables are updated, in particular the management table 20.

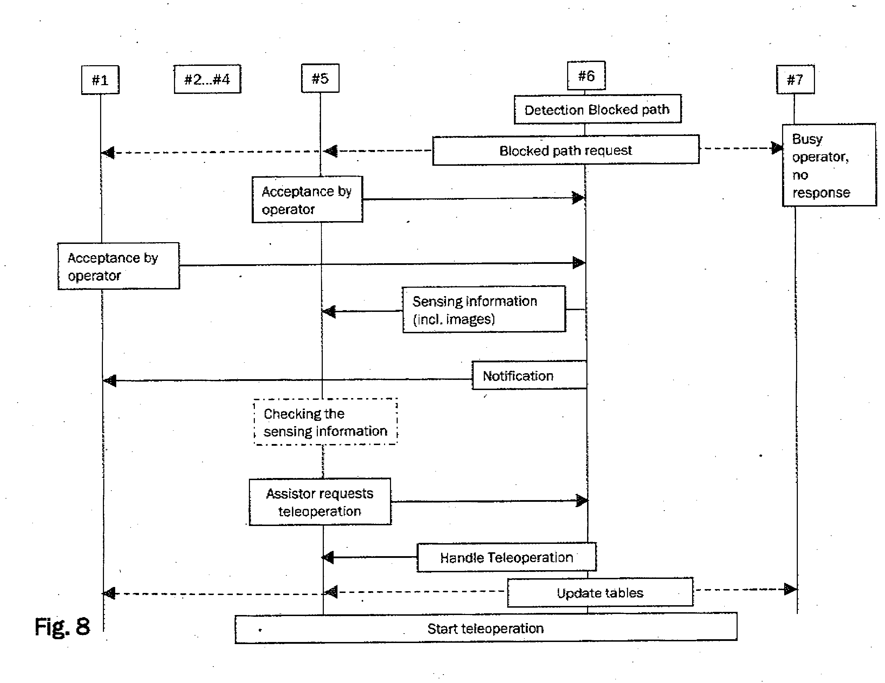

in Figure 8, an example is shown in case a blocked path is detected and a respective support request is transmitted via multicast to the vehicles 150-158. As in Figure 6, two operators/drivers accept the request and one operator does not respond because being busy. Other vehicles 150-158 are not specifically shown. Then, optionally upon further request of the possible assistor, further information for determining the exact problem may be submitted to the assistor so that he/she can determine the best possible response. In the present example, the assistor decides that the problem can be solved by V2V teleoperation so a respective teleoperation enabling request can be submitted to the vehicle #6 which enables the V2V teleoperation accordingly. Afterwards, the same further steps as described before can be performed.

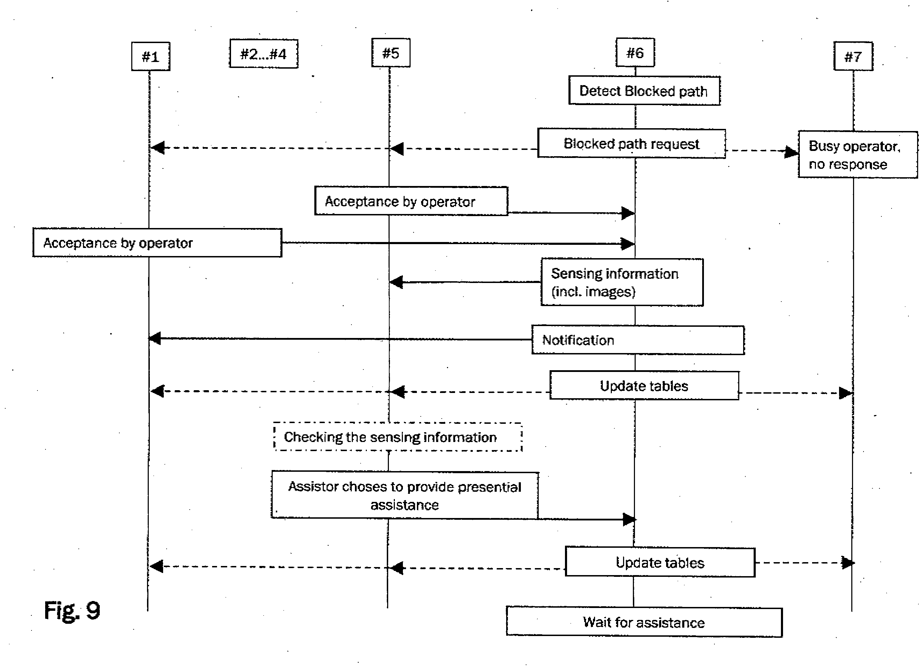

Figure 9 shows a blocked path incident which will lead to on-site assistance in a multicast sending mode. Specifically, the vehicle #6 detects a blocked path and issues the support request with the indication. Then, as in Figure 8, the flow proceeds likewise, however, the driver of the vehicle #5 decides, after checking the sensor information included in the support request data, that on-site assistance is preferable and indicates this to the vehicle #6. Respectively, the tables, especially the management table 20, is updated to include the new information, such as the changed status of the driver of vehicle #5. Vehicle #6 waits for on-site assistance afterwards.

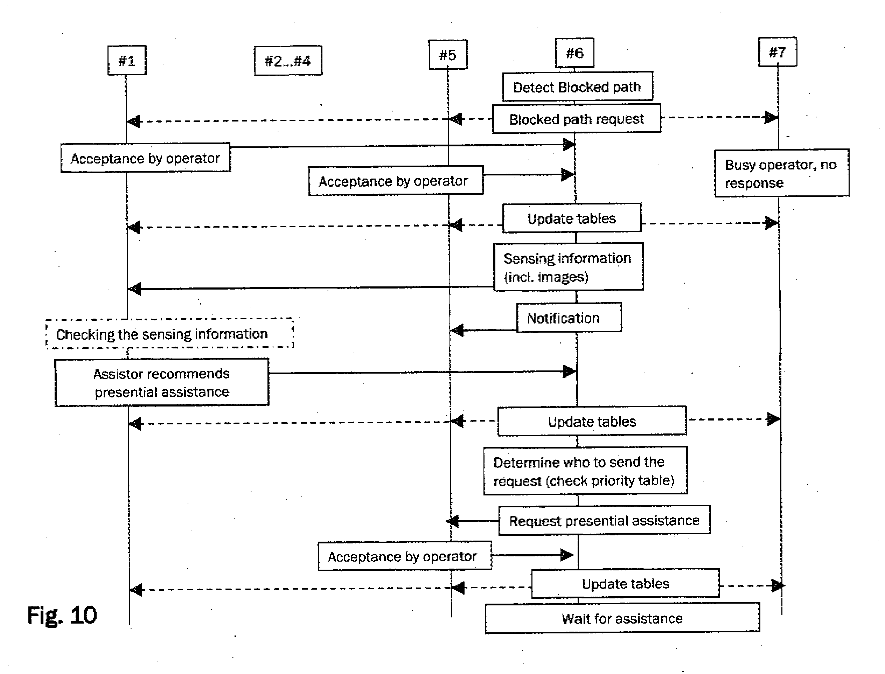

Figure 10 shows another procedure for a blocked path incident handling which relies on multicast issuance of the support request and unicast assignment of on-site assistance. Specifically, the support request is send by multicast to all vehicles #1 to #5 and #7. Then, operators of #1 and #5 accept the support request and the driver of #7 is busy. Afterwards the tables, i.e. the management tables 20 of all vehicles, are updated and the sensor information is sent to the operator of vehicle #1 while #5 is informed that the acceptance is denied. The driver of #1 checks the information and recommends on-site assistance which is notified to the vehicle #6. The management tables 20 are updated again and then it is determined based on a priority table (not shown) in the vehicles which operator should take over the on-site assistance. Since the closest one may be the fastest, the closest will be picked. The priority table may show the ranking of the closest operators, e.g., in a railway situation where the distances are predetermined. For example, in the present case the priority table may Include #7 as the first, being however busy. Therefore, the next one is selected, which is, in this example, #5. Then, a request for on-site assistance is sent to the vehicle #5 and the operator accepts it. The tables are then updated again and vehicle #6 waits for the arrival of the assistance.

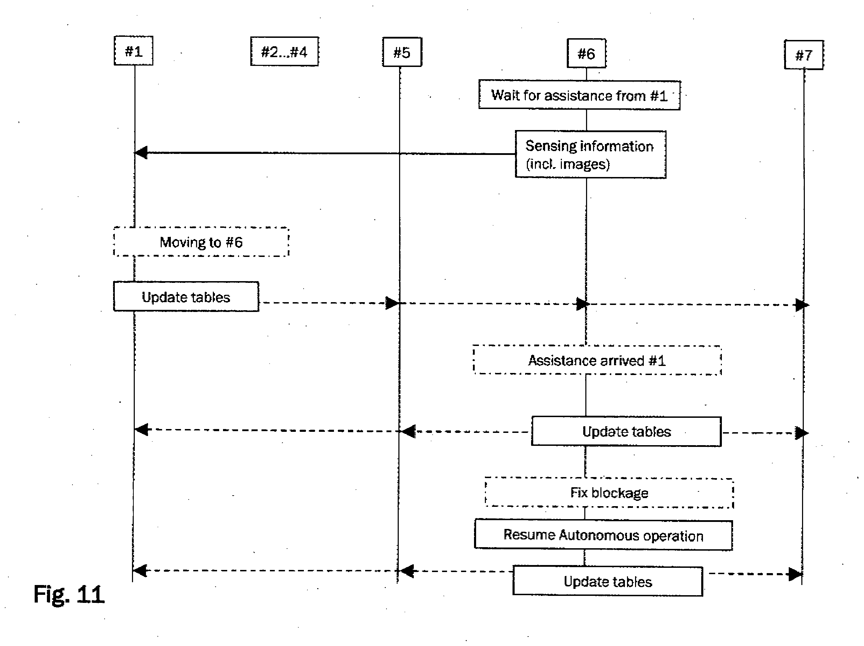

Further, Fig. 11 shows a possible procedure which is operated during the waiting for on-site assistance. Specifically, vehicle #6 waits for the arrival of vehicle #1 and may send further sensor information to the vehicle #1 in the meantime. The information sent may help the assistor to familiarize with the problem while his current vehicle drives autonomously towards the blocked one. Notice that the blockage might resolve also during the assistor trip (either by teleoperation or by external reasons: improvement of traffic conditions). Then, vehicle #6 arrives at vehicle #1 and the driver fixes a blockage or performs other acts for traversing the problem so that the autonomous driving can be resumed afterwards. During the above steps, further, the tables of the vehicle may be updated at different situations, e.g., as shown in Fig. 11.

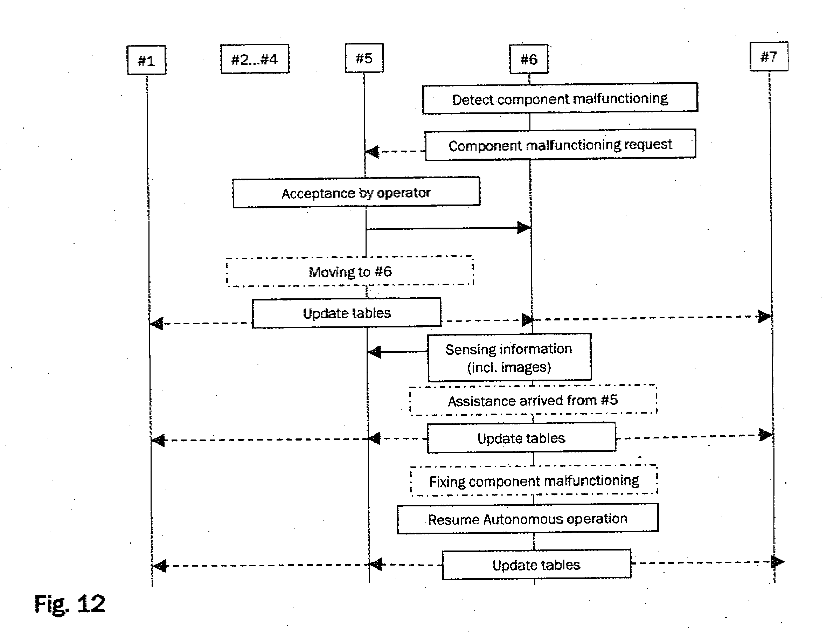

Fig. 12 shows a flow of steps for a unicast sending of a component malfunctioning. If vehicle #6' has a malfunction which is detected it sends a support request by unicast according to a priority table (not shown) saved in the storage space 17 or in a remote server. The operator of vehicle #5, which has been the recipient of the support request, accepts the request and starts moving to the site of vehicle #5. As shown, at different positions of time, the management tables 20 are updated for all vehicles. Further, due to the long time required to arrive at destination, the information about the operator on board is updated before the operator arrives. Each vehicle keeps updated information about all vehicles. Also the tables can be updated when the assistor has arrived. Further, the vehicle #6 keeps sending sensor information to the vehicle #5 while moving to the site so that the assistor can familiarize with the problem while the vehicle drives autonomously towards the blocked one. Notice that the blockage might resolve also during the assistor trip. The assistor, after arrival, fixes the malfunction and then the autonomous operation can be resumed.

General Procedures for the Return to autonomous operation:
After the assistor has performed the necessary actions to operate the requesting vehicle 100 upon an incident, the assistor returns the control back to the default autonomous operation by performing the required action on the cockpit 102 for that purpose. For that, after the vehicle 100 sends a support request, it may display in the cockpit 102 of the assistor a visible signal when the autonomous operation may take safe control again. This signal helps the assistor to make the decision on returning control to the autonomous vehicle 100. Depending on the application, a requesting vehicle 100 waiting for an assistor to take control may cancel the control request when it is not needed anymore (e.g. blocked path resolved) and continue the autonomous operation.

It is noted that for example the herein described system may be formed by different vehicles and networks, however, a schematic arrangement of vehicles 100, 150-158 grouped in the system and communicably connected is shown by Fig. 3b.

The proposed disclosure has, among others, technical benefits, such as vehicles are operated more efficiently; reducing frequency and duration of disruptions to improve service quality. The human operator can use its current vehicle 150-158 to move towards a vehicle 100 when on-site assistance is required.

Further, a number of vehicles 100, 150-158 (V) can be operated by a number of operator/teleoperators (O) where 0 <= V, for better efficiency and lower operation cost. Traditional driving remains possible if required by law or by eventuality (e.g. bad weather). More amenable workload that combines teleoperation with physical tasks (depending on the automation level, more diversity of tasks can be assigned to the operators to reduce boredom/drowsiness). Training of operator-teleoperators remains similar to traditional driving. Faster and more relevant on-site assistance because operator-teleoperators are constantly on site and know the context). No need of a teleoperation centre which reduces the cost of the system (related to facility, hardware, maintenance), improves security (distributed system instead of centralized), however, such center can be integrated within the proposed solution without reducing the scope of this invention. For instance, a teleoperation or control center may be integrated as an additional safety and management layer for big transportation systems with hundreds of vehicles (e.g. public transportation of big cities like Paris or Tokyo), where assistors may be on a waiting room (control centre), and/or may also teleoperate vehicles from another vehicle and from the teleoperation centre.

As will be appreciated by one of skill in the art, the present disclosure, as described hereinabove and the accompanying figures, may be embodied as a method (e.g., a computer-implemented process or any other process), apparatus (including a device, machine, system, computer program product, and/or any other apparatus), or a combination of the foregoing. Aspects/Examples of the present disclosure may be a software entirely (includingfirmware, resident software, micro-code, etc.), or a combination of software and hardware aspects that may be referred to as a "system". Furthermore, the present disclosure may take the form of a computer program product on a computer-readable medium having computer-executable program code embodied in the medium.

it should be noted that arrows may be used in drawings to represent communication, transfer, or other activity involving two or more entities. If present, double-ended arrows generally indicate that activity may occur in both directions (e.g., a command/request in one direction with a corresponding reply back in the other direction, or peer-to-peer communications initiated by either entity), although in some situations, activity may not necessarily occur in both directions.

Single-ended arrows generally indicate activity exclusively or predominantly in one direction, although it should be noted that, in certain situations, such directional activity actually may involve activities in both directions (e.g., a message from a sender to a receiver and an acknowledgement back from the receiver to the sender, or establishment of a connection prior to a transfer and termination of the connection following the transfer). Thus, the type of arrow used in a particular drawing to represent a particular activity is exemplary and should not be seen as limiting.

The present disclosure may be described with reference to flowchart illustrations and/or block diagrams of methods and apparatuses, and with reference to a number of sample views of a graphical user interface generated by the methods and/or apparatuses. It will be understood that each block of the flowchart illustrations and/or block diagrams, and/or combinations of blocks in the flowchart illustrations and/or block diagrams, as well as the graphical user interface, can be implemented by computer-executable program code.

The computer-executable program code may be provided to a processor of a general purpose computer, special purpose computer, or other programmable data processing apparatus to produce a particular machine, such that the program code, which executes via the processor of the computer or other programmable data processing apparatus, create means for implementing the functions/acts/outputs specified in the flowchart, figures, and/or written description.

The computer-executable program code may also be stored in a computer-readable memory that can direct a computer or other programmable data processing apparatus to function in a particular manner, such that the program code stored in the computer readable memory produce an article of manufacture including instruction means which implement the function/act/output specified in the flowchart, block diagram block(s), figures, and/or written description.

The computer-executable program code may also be loaded onto a computer or other programmable data processing apparatus to cause a series of operational steps to be performed on the computer or other programmable apparatus to produce a computer-implemented process such that the program code which executes on the computer or other programmable apparatus provides steps for implementing the functions/acts/outputs specified in the flowchart, figures, and/or written description. Alternatively, computer program implemented steps or acts may be combined with operator or human implemented steps or acts in order to carry out an embodiment of the disclosure.

It should be noted that terms such as "server" and "processor" may be used herein to describe devices that may be used in certain aspects of the present disclosure and should not be construed to limit the present disclosure to any particular device type unless the context otherwise requires. Thus, a device may include, without limitation, a bridge, router, bridge-router (brouter), switch, node, server, computer, appliance, or other type of device. Such devices typically include one or more network interfaces for communicating over a communication network and a processor (e.g., a microprocessor with memory and other peripherals and/or application-specific hardware) configured accordingly to perform device functions.

Communication networks generally may include public and/or private networks; may include local-area, wide-area, metropolitan-area, storage, and/or other types of networks; and may employ communication technologies including, but in no way limited to, analog technologies, digital technologies, optical technologies, wireless technologies (e.g., Bluetooth), networking technologies, and internetworking technologies.

It should also be noted that devices may use communication protocols and messages (e.g., messages created, transmitted, received, stored, and/or processed by the device), and such messages may be conveyed by a communication network or medium.

Unless the context otherwise requires, the present disclosure should not be construed as being limited to any particular communication message type, communication message format, or communication protocol. Thus, a communication message generally may include, without limitation, a frame, packet, datagram, user datagram, cell, or other type of communication message.

Unless the context requires otherwise, references to specific communication protocols are exemplary, and it should be understood that alternatives may, as appropriate, employ variations of such communication protocols (e.g., modifications or extensions of the protocol that may be made from time-to-time) or other protocols either known or developed in the future.

It should also be noted that logic flows may be described herein to demonstrate various aspects of the disclosure, and should not be construed to limit the present disclosure to any particular logic flow or logic implementation. The described logic may be partitioned into different logic blocks (e.g., programs, modules, functions, or subroutines) without changing the overall results or otherwise departing from the true scope of the disclosure.

Often, logic elements may be added, modified, omitted, performed in a different order, or implemented using different logic constructs (e.g., logic gates, looping primitives, conditional logic, and other logic constructs) without changing the overall results or otherwise departing from the scope of the disclosure.

The present disclosure may be embodied in many different forms, including, but in no way limited to, a graphical processing unit as well as computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof. Computer program logic implementing some or all of the described functionality is typically implemented as a set of computer program instructions that is converted into a computer executable form, stored as such in a computer readable medium, and executed by a microprocessor under the control of an operating system. Hardware-based logic implementing some or all of the described functionality may be implemented using one or more appropriately configured FPGAs.

Computer program logic implementing all or part of the functionality previously described herein may be embodied in various forms, including, but in no way limited to, a source code form, a computer executable form, and various intermediate forms (e.g., forms generated by an assembler, compiler, linker, or locator).

Source code may include a series of computer program instructions implemented in any of various programming languages (e.g., an object code, an assembly language, or a high-level language such as Fortran, python, C, C++, JAVA, JavaScript or HTML) for use with various operating systems or operating environments. The source code may define and use various data structures and communication messages. The source code may be in a computer executable form (e.g., via an interpreter), or the source code maybe converted (e.g., via a translator, assembler, or compiler) into a computer executable form.

Computer-executable program code for carrying out operations of embodiments of the present disclosure may be written in an object oriented, scripted or unscripted programming language such as Java, Perl, Smalltalk, C++, or the like. However, the computer program code for carrying out operations of aspects of the present disclosure may also be written in conventional procedural programming languages, such as the "C" programming language or similar programming languages.

Computer program logic implementing all or part of the functionality previously described herein may be executed at different times on a single processor (e.g., concurrently) or may be executed at the same or different times on multiple processors and may run under a single operating system process/thread or under different operating system processes/threads.

Thus, the term "computer process" refers generally to the execution of a set of computer program instructions regardless of whether different computer processes are executed on the same or different processors and regardless of whether different computer processes run under the same operating system process/thread or different operating system processes/threads.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device.

The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies.

The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Any suitable computer readable medium may be utilized. The computer readable medium may be, for example but not limited to, an electronic, magnetic, optical, electromagnetic, infrared, or semiconductor system, apparatus, device, or medium.

More specific examples of the computer readable medium include, but are not limited to, an electrical connection having one or more wires or other tangible storage medium such as a portable computer diskette, a hard disk, a random access memory (RAM), a read-only memory (ROM), an erasable programmable read-only memory (EPROM or Flash memory), a compact disc read-only memory (CD-ROM), or other optical or magnetic storage device.

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device.

The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies.

The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web). Of course, some embodiments of the disclosure may be implemented as a combination of both software (e.g., a computer program product) and hardware. Still other aspects of the present disclosure are implemented as entirely hardware, or entirely software.

While certain exemplary aspects have been described and shown in the accompanying drawings, it is to be understood that such embodiments are merely illustrative of and are not restrictive on the broad disclosure, and that the aspects of the present disclosure are not limited to the specific constructions and arrangements shown and described, since various other changes, combinations, omissions, modifications and substitutions, in addition to those set forth in the above paragraphs, are possible.
Controller 1
Control Device/Teleoperation control unit 10
Support Request unit 11
Autonomous Driving Control unit 12
Other Electronic Control unit(s) 13-16
Data Storage Space 17
Management Table 20
Vehicle ID (data) 21
Operation mode (data) 22
Operator present (data) 23
Operator status (data) 24
C2V data 25
Vehicle 100
Sensors 101
Cockpit 102
Communication Device 103
Control/Driving Device 104, 104a, 104b
Display 105
Communication Device/Transceiver 103
Other Vehicle(s) 150-158

## Claims

1. A system including a plurality of vehicles (100), wherein in some vehicles (100) an operator-teleoperator is present and in other vehicles (100) no operator-teleoperator is present, and wherein the vehicles (100) are communicably connected with each other via a network, each vehicle (100) comprising:
- a communication device (103) configured for transmitting and receiving data wireless; and
- a control device (10) configured to provide an autonomous driving mode, a manual driving mode and a vehicle-to-vehicle teleoperation driving mode;
- wherein, in the autonomous driving mode, the driving of the vehicle (100) is controllable automatically, in the manual driving mode, the driving of the vehicle (100) is controllable by an operator-teleoperator, **characterized in that** in the vehicleto-vehicle teleoperation driving mode, the driving of the vehicle (100) is controllable by an operator-teleoperator who is located in another vehicle (150-158) of the plurality of vehicles (100),
each vehicle (100) further comprising
- a support request unit (11) configured to detect an incident that prevents the use of the autonomous driving mode and transmit a support request through the communication device (103) to human assistors which are the operators-teleoperators of the other vehicles (150-158) when detecting the incident to provide on-site assistance and/or teleoperation to the vehicle (100) requesting it.

2. The system according to claim 1, wherein the vehicle (100) further includes sensors (101) to sense the surroundings, and the support request includes incident information about the detected incident which prevents the use of the autonomous driving mode.

3. The system according to claim 1 or 2, wherein the vehicle further includes sensors (101) to sense the surroundings of the vehicle (100), and
the control device (10) further configured to determine a type of the detected incident based on sensor data from the sensors (101).

4. The system according to at least one of the preceding claims, wherein the support request includes an indication whether on-site assistance or vehicle-to-vehicle teleoperation driving is required depending on the kind of incident which the support request unit (11) detects and determines based on sensor data, environmental data, or position data of the vehicle (100), wherein,
- in case a blocked path situation has been determined by the support request unit (11), the support request unit transmits the support request which does not include the indication,
- in case a high risk driving area has been determined by the support request unit (11), the support request unit (11) transmits the support request which includes the indication that vehicle-to-vehicle teleoperation driving is requested,
- in case a malfunction of a component of the vehicle (100) has been determined by the support request unit (11), the support request unit (11) transmits the support request which includes the indication that on-site assistance is requested,
- in case a bad weather situation has been determined by the support request unit (11), the support request unit (11) transmits the support request which includes the indication that vehicle-to-vehicle teleoperation driving is preferable.

5. The system according to at least one of the preceding claims, wherein the support request unit (11) issues the support request either via unicast or multicast, wherein the unicast or multicast sending mode is selected based on a predetermined sending policy and/or the kind of the detected incident that are stored in a storage space (17).

6. The system according to at least one of the preceding claims, wherein the vehicle (100) further has a management table (20) stored in a storage space (17) and provided to contain, for the vehicle and other vehicles, vehicle identification information, operation mode information, driver on board information, and driver status information, and the support request unit (11) is configured to send the support request based on the information of the management table (20) and a location information of each other vehicle (150-158).

7. The system according to at least one of the preceding claims, wherein the vehicle (100) comprises a priority table that includes priority information about possible support request recipients, and, if the support request is to be sent via unicast, the support request is sent to the recipient with the highest priority in the priority table, wherein the possible support recipients are operators-teleoperators of the other vehicles.

8. The system according to at least one of the preceding claims 6 to 7, wherein the management table (20) and/or the priority table is updated, respectively, when a preset change event has occurred.

9. The system according to at least one of the preceding claims, wherein the vehicle (100) further includes
- a cockpit (102) including a driving device (104) configured to output driving commands to the vehicle (100) or to another vehicle (150-158), and a display (105) configured to selectively display the surroundings and vehicle control data of the vehicle (100) or of another vehicle (150-158).

10. The system according to at least one of the preceding claims, wherein the vehicle (100) further includes an interface configured to connect with a mobile device of the driver for data exchange and when the mobile device of the driver is connected to the interface, the support request of another vehicle (150-158) is displayed on a screen of the mobile device.

11. The system according to at least one of the preceding claims 6 to 10, wherein the control device (10) of the vehicle (100) sends a rejection command in reply to a support request of another vehicle (150-158) if the management table (20) indicates that the operator status of the vehicle (100) is not available.

12. The system according to claim 1, further including a teleoperation center for providing a teleoperation center teleoperation of one or more of the vehicles (100), and the management table (20) includes another entry indicating the status of the operator in the teleoperation center.

## Patentansprüche

1. System mit einer Mehrzahl von Fahrzeugen (100), wobei in einigen Fahrzeugen (100) ein Bediener-Teleoperator vorhanden ist und in anderen Fahrzeugen (100) kein Bediener-Teleoperator vorhanden ist, und wobei die Fahrzeuge (100) über ein Netzwerk miteinander kommunikativ verbunden sind, wobei jedes Fahrzeug (100) umfasst:
- eine Kommunikationsvorrichtung (103), die zum drahtlosen Senden und Empfangen von Daten konfiguriert ist; und
- eine Steuervorrichtung (10), die konfiguriert ist, um einen autonomen Fahrmodus, einen manuellen Fahrmodus und einen Fahrzeug-zu-Fahrzeug-Teleoperations-Fahrmodus bereitzustellen;
- wobei im autonomen Fahrmodus das Fahren des Fahrzeugs (100) automatisch steuerbar ist, im manuellen Fahrmodus das Fahren des Fahrzeugs (100) durch einen Bediener-Teleoperator steuerbar ist, **dadurch gekennzeichnet, dass** im Fahrzeug-zu-Fahrzeug-Teleoperations-Fahrmodus
das Fahren des Fahrzeugs (100) durch einen Bediener-Teleoperator steuerbar ist, der sich in einem anderen Fahrzeug (150-158) der Mehrzahl von Fahrzeugen (100) befindet,
wobei jedes Fahrzeug (100) ferner umfasst
- eine Unterstützungsanforderungseinheit (11), die konfiguriert ist, um einen Vorfall zu erkennen, der die Verwendung des autonomen Fahrmodus verhindert, und eine Unterstützungsanforderung durch die Kommunikationsvorrichtung (103) an menschliche Assistenten zu senden, die die Bediener-Teleoperatoren der anderen Fahrzeuge (150-158) sind, wenn der Vorfall erkannt wird, um dem Fahrzeug (100), das ihn anfordert, vor Ort Unterstützung und/oder Teleoperation bereitzustellen.

2. System nach Anspruch 1, wobei das Fahrzeug (100) ferner Sensoren (101) umfasst, um die Umgebung zu erfassen, und die Unterstützungsanforderung Vorfallinformationen über den erkannten Vorfall umfasst, die die Verwendung des autonomen Fahrmodus verhindern.

3. System nach Anspruch 1 oder 2, wobei das Fahrzeug ferner Sensoren (101) umfasst, um die Umgebung des Fahrzeugs (100) zu erfassen, und
die Steuervorrichtung (10) ferner konfiguriert ist, um eine Art des erkannten Vorfalls basierend auf Sensordaten von den Sensoren (101) zu bestimmen.

4. System nach mindestens einem der vorhergehenden Ansprüche, wobei die Unterstützungsanforderung eine Angabe umfasst, ob vor Ort Unterstützung oder Fahrzeug-zu-Fahrzeug-Teleoperations-Fahrmodus erforderlich ist, abhängig von der Art des Vorfalls, den die Unterstützungsanforderungseinheit (11) erkennt und basierend auf Sensordaten, Umgebungsdaten oder Positionsdaten des Fahrzeugs (100) bestimmt, wobei
- falls eine blockierte Wegsituation durch die Unterstützungsanforderungseinheit (11) bestimmt wurde, die Unterstützungsanforderungseinheit die Unterstützungsanforderung sendet, die die Angabe nicht umfasst,
- falls ein Fahrbereich mit hohem Risiko durch die Unterstützungsanforderungseinheit (11) bestimmt wurde, die Unterstützungsanforderungseinheit (11) die Unterstützungsanforderung sendet, die die Angabe umfasst, dass Fahrzeug-zu-Fahrzeug-Teleoperations-Fahrmodus angefordert wird,
- falls eine Fehlfunktion einer Komponente des Fahrzeugs (100) durch die Unterstützungsanforderungseinheit (11) bestimmt wurde, die Unterstützungsanforderungseinheit (11) die Unterstützungsanforderung sendet, die die Angabe umfasst, dass vor Ort Unterstützung angefordert wird,
- falls eine schlechte Wettersituation durch die Unterstützungsanforderungseinheit (11) bestimmt wurde, die Unterstützungsanforderungseinheit (11) die Unterstützungsanforderung sendet, die die Angabe umfasst, dass Fahrzeug-zu-Fahrzeug-Teleoperations-Fahrmodus bevorzugt ist.

5. System nach mindestens einem der vorhergehenden Ansprüche, wobei die Unterstützungsanforderungseinheit (11) die Unterstützungsanforderung entweder über Unicast oder Multicast ausgibt, wobei der Unicast- oder Multicast-Sendemodus basierend auf einer vorbestimmten Senderichtlinie und/oder der Art des erkannten Vorfalls ausgewählt wird, die in einem Speicherraum (17) gespeichert sind.

6. System nach mindestens einem der vorhergehenden Ansprüche, wobei das Fahrzeug (100) ferner eine Verwaltungstabelle (20) aufweist, die in einem Speicherraum (17) gespeichert ist und bereitgestellt ist, um für das Fahrzeug und andere Fahrzeuge Fahrzeugidentifikationsinformationen, Betriebsmodusinformationen, Fahrerinformationen an Bord und Fahrerstatusinformationen zu enthalten, und die Unterstützungsanforderungseinheit (11) konfiguriert ist, um die Unterstützungsanforderung basierend auf den Informationen der Verwaltungstabelle (20) und einer Standortinformation jedes anderen Fahrzeugs (150-158) zu senden.

7. System nach mindestens einem der vorhergehenden Ansprüche, wobei das Fahrzeug (100) eine Prioritätstabelle umfasst, die Prioritätsinformationen über mögliche Unterstützungsanforderungsempfänger umfasst, und, wenn die Unterstützungsanforderung über Unicast gesendet werden soll, die Unterstützungsanforderung an den Empfänger mit der höchsten Priorität in der Prioritätstabelle gesendet wird, wobei die möglichen Unterstützungsempfänger Bediener-Teleoperatoren der anderen Fahrzeuge sind.

8. System nach mindestens einem der vorhergehenden Ansprüche 6 bis 7, wobei die Verwaltungstabelle (20) bzw. die Prioritätstabelle aktualisiert wird, wenn ein voreingestelltes Änderungsereignis aufgetreten ist.

9. System nach mindestens einem der vorhergehenden Ansprüche, wobei das Fahrzeug (100) ferner umfasst
- ein Cockpit (102), das eine Fahrvorrichtung (104) umfasst, die konfiguriert ist, um Fahrbefehle an das Fahrzeug (100) oder an ein anderes Fahrzeug (150-158) auszugeben, und eine Anzeige (105), die konfiguriert ist, um die Umgebung und Fahrzeugsteuerdaten des Fahrzeugs (100) oder eines anderen Fahrzeugs (150-158) selektiv anzuzeigen.

10. System nach mindestens einem der vorhergehenden Ansprüche, wobei das Fahrzeug (100) ferner eine Schnittstelle umfasst, die konfiguriert ist, um sich mit einer mobilen Vorrichtung des Fahrers zum Datenaustausch zu verbinden, und wenn die mobile Vorrichtung des Fahrers mit der Schnittstelle verbunden ist, die Unterstützungsanforderung eines anderen Fahrzeugs (150-158) auf einem Bildschirm der mobilen Vorrichtung angezeigt wird.

11. System nach mindestens einem der vorhergehenden Ansprüche 6 bis 10, wobei die Steuervorrichtung (10) des Fahrzeugs (100) einen Ablehnungsbefehl als Antwort auf eine Unterstützungsanforderung eines anderen Fahrzeugs (150-158) sendet, wenn die Verwaltungstabelle (20) anzeigt, dass der Bedienerstatus des Fahrzeugs (100) nicht verfügbar ist.

12. System nach Anspruch 1, ferner umfassend ein Teleoperationszentrum zum Bereitstellen einer Teleoperationszentrum-Teleoperation eines oder mehrerer der Fahrzeuge (100), und die Verwaltungstabelle (20) umfasst einen anderen Eintrag, der den Status des Bedieners im Teleoperationszentrum anzeigt.

## Revendications

1. Système comprenant une pluralité de véhicules (100), dans lequel, dans certains véhicules (100), un opérateur-téléopérateur est présent et, dans d'autres véhicules (100), aucun opérateur-téléopérateur n'est présent, et dans lequel les véhicules (100) sont connectés en communication les uns avec les autres par l'intermédiaire d'un réseau, chaque véhicule (100) comprenant :
- un dispositif de communication (103) configuré pour transmettre et recevoir des données sans fil ; et
- un dispositif de commande (10) configuré pour fournir un mode de conduite autonome, un mode de conduite manuelle et un mode de conduite de téléopération de véhicule à véhicule ;
- dans lequel, dans le mode de conduite autonome, la conduite du véhicule (100) peut être commandée automatiquement, dans le mode de conduite manuelle, la conduite du véhicule (100) peut être commandée par un opérateur-téléopérateur, **caractérisé en ce que** dans la conduite de téléopération de véhicule à véhicule
mode, la conduite du véhicule (100) peut être commandée par un opérateur-téléopérateur qui est situé dans un autre véhicule (150-158) de la pluralité de véhicules (100),
chaque véhicule (100) comprenant en outre
- une unité de demande d'assistance (11) configurée pour détecter un incident qui empêche l'utilisation du mode de conduite autonome et transmettre une demande d'assistance par l'intermédiaire du dispositif de communication (103) à des assistants humains qui sont les opérateurs-téléopérateurs des autres véhicules (150-158) lors de la détection de l'incident pour fournir une assistance sur site et/ou une téléopération au véhicule (100) qui le demande.

2. Système selon la revendication 1, dans lequel le véhicule (100) comprend en outre des capteurs (101) pour détecter l'environnement, et la demande d'assistance comprend des informations d'incident concernant l'incident détecté qui empêche l'utilisation du mode de conduite autonome.

3. Système selon la revendication 1 ou 2, dans lequel le véhicule comprend en outre des capteurs (101) pour détecter l'environnement du véhicule (100), et
le dispositif de commande (10) est en outre configuré pour déterminer un type de l'incident détecté sur la base de données de capteur provenant des capteurs (101).

4. Système selon au moins l'une des revendications précédentes, dans lequel la demande d'assistance comprend une indication si une assistance sur site ou une conduite de téléopération de véhicule à véhicule est requise en fonction du type d'incident que l'unité de demande d'assistance (11) détecte et détermine sur la base de données de capteur, de données environnementales ou de données de position du véhicule (100), dans lequel,
- dans le cas où une situation de trajet bloqué a été déterminée par l'unité de demande d'assistance (11), l'unité de demande d'assistance transmet la demande d'assistance qui ne comprend pas l'indication,
- dans le cas où une zone de conduite à risque élevé a été déterminée par l'unité de demande d'assistance (11), l'unité de demande d'assistance (11) transmet la demande d'assistance qui comprend l'indication qu'une conduite de téléopération de véhicule à véhicule est demandée,
- dans le cas où un dysfonctionnement d'un composant du véhicule (100) a été déterminé par l'unité de demande d'assistance (11), l'unité de demande d'assistance (11) transmet la demande d'assistance qui comprend l'indication qu'une assistance sur site est demandée,
- dans le cas où une mauvaise situation météorologique a été déterminée par l'unité de demande d'assistance (11), l'unité de demande d'assistance (11) transmet la demande d'assistance qui comprend l'indication qu'une conduite de téléopération de véhicule à véhicule est préférable.

5. Système selon au moins l'une des revendications précédentes, dans lequel l'unité de demande d'assistance (11) émet la demande d'assistance soit par monodiffusion soit par multidiffusion, dans lequel le mode d'envoi monodiffusion ou multidiffusion est sélectionné sur la base d'une politique d'envoi prédéterminée et/ou du type de l'incident détecté qui sont stockés dans un espace de stockage (17).

6. Système selon au moins l'une des revendications précédentes, dans lequel le véhicule (100) a en outre une table de gestion (20) stockée dans un espace de stockage (17) et prévue pour contenir, pour le véhicule et d'autres véhicules, des informations d'identification de véhicule, des informations de mode de fonctionnement, des informations de conducteur à bord, et des informations d'état de conducteur, et l'unité de demande d'assistance (11) est configurée pour envoyer la demande d'assistance sur la base des informations de la table de gestion (20) et d'informations de localisation de chaque autre véhicule (150-158).

7. Système selon au moins l'une des revendications précédentes, dans lequel le véhicule (100) comprend une table de priorité qui comprend des informations de priorité concernant des destinataires de demande d'assistance possibles, et, si la demande d'assistance doit être envoyée par monodiffusion, la demande d'assistance est envoyée au destinataire ayant la priorité la plus élevée dans la table de priorité, dans lequel les destinataires d'assistance possibles sont des opérateurs-téléopérateurs des autres véhicules.

8. Système selon au moins l'une des revendications précédentes 6 à 7, dans lequel la table de gestion (20) et/ou la table de priorité sont mises à jour, respectivement, lorsqu'un événement de changement prédéfini s'est produit.

9. Système selon au moins l'une des revendications précédentes, dans lequel le véhicule (100) comprend en outre
- un cockpit (102) comprenant un dispositif de conduite (104) configuré pour délivrer des commandes de conduite au véhicule (100) ou à un autre véhicule (150-158), et un affichage (105) configuré pour afficher sélectivement l'environnement et des données de commande de véhicule du véhicule (100) ou d'un autre véhicule (150-158).

10. Système selon au moins l'une des revendications précédentes, dans lequel le véhicule (100) comprend en outre une interface configurée pour se connecter à un dispositif mobile du conducteur pour un échange de données et, lorsque le dispositif mobile du conducteur est connecté à l'interface, la demande d'assistance d'un autre véhicule (150-158) est affichée sur un écran du dispositif mobile.

11. Système selon au moins l'une des revendications précédentes 6 à 10, dans lequel le dispositif de commande (10) du véhicule (100) envoie une commande de rejet en réponse à une demande d'assistance d'un autre véhicule (150-158) si la table de gestion (20) indique que l'état d'opérateur du véhicule (100) n'est pas disponible.

12. Système selon la revendication 1, comprenant en outre un centre de téléopération pour fournir une téléopération de centre de téléopération d'un ou plusieurs des véhicules (100), et la table de gestion (20) comprend une autre entrée indiquant l'état de l'opérateur dans le centre de téléopération.
